(19) Europäisches Patentamt

European Patent Office

Office européen des brevets

(11) Veröffentlichungsnummer: **0 237 793 B1**

(12) # EUROPÄISCHE PATENTSCHRIFT

(45) Veröffentlichungstag der Patentschrift: **02.01.92**

(21) Anmeldenummer: **87102021.0**

(22) Anmeldetag: **13.02.87**

(51) Int. Cl.⁵: **C02F 1/78**, C02F 1/76, C02F 1/00, E04H 4/16

(54) **Verfahren und Vorrichtung zur Aufbereitung und Desinfektion von Schwimm- und Badebeckenwasser unter Verwendung von Chlor und Ozon.**

(30) Priorität: **19.02.86 DE 3605249**

(43) Veröffentlichungstag der Anmeldung:
**23.09.87 Patentblatt 87/39**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**AT-B- 308 011**     **FR-A- 2 105 871**
**FR-A- 2 237 843**     **US-A- 3 326 747**
**US-A- 3 674 216**     **US-A- 4 176 061**

(73) Patentinhaber: **Tamir, Shlomo**
**Lichtensteinstrasse 3**
**W-6000 Frankturt am Main 1(DE)**

(72) Erfinder: **Tamir, Shlomo**
**Lichtensteinstrasse 3**
**W-6000 Frankturt am Main 1(DE)**

(74) Vertreter: **Bartsch, Elisabeth, Dr.**
**Patentanwälte Lotterhos & Partner Lichten-**
**steinstrasse 3**
**W-6000 Frankturt am Main 1(DE)**

EP 0 237 793 B1

**Beschreibung**

Die Erfindung betrifft ein Verfahren und eine Vorrichtung zur Aufbereitung und Desinfektion von Schwimm- und Badebeckenwasser unter Verwendung von Chlor und Ozon und betrifft im besonderen die Ozonung des Rohwassers.

Die Aufbereitung von Schwimm- und Badebeckenwasser, nachfolgend kurz auch als Badewasser bezeichnet, hat die Aufgabe, zu jeder Zeit im Becken eine Wasserbeschaffenheit sicherzustellen, die ein Infektionsrisiko für die Badegäste ausschließt. Dazu muß im Badewasser nicht nur eine hinreichend hohe Desinfektionswirkung aufrechterhalten werden, sondern entscheidend auch das Wasser außerhalb des Beckens kontinuierlich von gelösten und ungelösten Verunreinigungen und, so dennoch im Badewasser enthalten, von Mikroorganismen befreit werden, Für diese Wasseraufbereitung außerhalb des Beckens wird das Beckenwasser kontinuierlich umgewälzt, das entnommene Rohwasser gereinigt, desinfiziert und mit einem überschuß an Desinfektionsmittel versetzt als Reinwasser ins Becken zurückgeleitet, Die Verhältnisse sind äußerst komplex, da das System "Schwimmbad" von einer Vielzahl von Parametern beeinflußt wird, auf die in ihrer Gesamtheit hier nicht eingegangen werden soll und kann. Insoweit wird auf die Literatur verwiesen, zu der auszugsweise genannt werden

- KOK-Richtlinien für den Bäderbau. 2.Auflage (1982), W.Tümmels Verlag, Nürnberg,
- W.Roeske, Schwimmbeckenwasser, Anforderungen-Aufbereitung-Untersuchung, Verlag O.Haase, Lübeck (1980),

und insbesondere die

- Deutsche Norm DIN 19 643 Aufbereitung und Desinfektion von Schwimm- und Badebeckenwasser, April 1984, herausgegeben vom Normenausschuß Wasserwesen im DIN Deutsches Institut für Normung e.V.,

in welchen auf eine Fülle weiterer Literaturstellen Bezug genommen ist.

Eine Teilübersicht über die Anforderungen nach DIN 19 643 an die Wasserbeschaffenheit des Badewassers und von konventionellen Maßnahmen zur Erzielung der gewünschten Qualität des Becken- oder Badewassers findet sich in der weiter hinten stehenden Tabelle 1.

Der Desinfektion kommt, wie gesagt, bei der Aufbereitung von Schwimmbeckenwasser eine besondere Bedeutung zu. Ein gutes Desinfektionsmittel soll pathogene Keime im Wasser schnell abtöten bzw. inaktivieren und die Keimzahl möglichst niedrig halten, wobei das Badewasser eine Kolonienzahl von höchstens 100 pro ml aufweisen darf und Escheria coli-Bakterien (E.coli) als Indikatorkeime für fäkale Verunreinigungen überhaupt nicht nachweisbar sein dürfen. Im Idealfall sollte das Desinfektionsmittel algizid, fungizid, bakterizid und virus inaktivierend sein, also ein breites Wirkungsspektrum haben, wobei man von der Erkenntnis ausgeht (vgl. Roeske, a.a.O., 204 ff.), daß die Wirkung des Desinfektionsmittels nicht nur in einem unmittelbaren chemischen Angriff auf den Mikroorganismus zu suchen ist, sondern besonders darin liegt, daß es im Wasser ein Redoxpotential aufbaut und aufrechterhalten soll, welchem gegenüber die Mikroorganismen nicht lebensfähig sind. Innerhalb der Zelle eines Mikroorganismus liegt ein bestimmtes Redoxsystem mit einem begrenzten Redoxpotentialbereich und einem bestimmten pH-Wert vor. Überschreitet das Redoxpotential des umgebenden Wassers nun einen gewissen Grenzwertbereich, beeinflußt das den Stoffwechsel des Mikroorganismus bis zu dessen Lebensunfähigkeit. Als für Schwimmbadwässer "sicheres" Redoxpotential gilt im großen und ganzen ein Wert von oberhalb etwa 600 mV für eine Abtötung nach einer Einwirkungszeit von unterhalb einer Minute.

Weiterhin soll das Desinfektionsmittel in einer möglichst niedrigen Anwendungskonzentration einsetzbar sein, in der es weder auf die technischen Einrichtungen korrodierend wirkt noch toxisch ist oder schädliche Nebenwirkungen auf den Badegast ausübt. Es soll geschmacks- und geruchsneutral sein, muß im Wasser genügend beständig sein, um ihm eine hinreichende und andauernde Keimtötungswirkung zu verleihen (Depotwirkung), soll neben der Desinfektionswirkung dabei auch eine oxidative Wirkung auf die Wasserinhaltsstoffe haben, ohne mit diesen jedoch störende Verbindungen einzugehen, darf das Wasser nicht zusätzlich belasten, wobei die Reaktionsprodukte biologisch abbaubar sein sollen, sollte unter wirtschaftlich vertretbarem Kostenaufwand erhältlich sein und überdies zuverlässig, sicher und genau zu dosieren und sicher, einfach und schnell in seiner Konzentration im Wasser bestimmbar sein. Ein derartiges ideales Desinfektionsmittel ist nicht bekannt, doch erfüllen Chlorgas und einige Clorverbindungen einen Großteil der aufgezählten Anforderungen. Für die Badewasserdesinfektion ist insbesondere Chlorgas das Desinfektionsmittel der Wahl.

Die mit der Chloranwendung verbundenen Nachteile sind allgemein bekannt und äußern sich unter anderem in Geruchsbelästigungen, in Augenreizungen und in Hautunverträglichkeiten. Bezüglich der Geruchsbelästigung und der Augenreizung wurde erkannt, daß hierfür nicht etwa das im Wasser gelöste elementare Chlor oder dessen Hydrolyseprodukte Salzsäure und unterchlorige Säure verantwortlich sind, sondern die Umsetzungsprodukte mit den im Wasser vorhandenen Ammoniakderivaten (Chloramine). In Form der Chloramine liegt das Chlor zugleich als "gebundenes" Chlor vor. das aus ihnen allerdings teilweise wieder freigesetzt werden kann.

Zur Badewasseraufbereitung hat ferner Ozon Eingang gefunden, das das stärkste Oxidations- und Desinfektionsmittel überhaupt ist, das man für die Wasseraufbereitung einsetzen kann. Ozon hat sehr gute bakterizide, viruzide und sporozide Eigenschaften und kann kolloid im Wasser verteilte Stoffe zum Teil ausflocken. Ferner verbessert es den Geruch, den Geschmack und die optischen Eigenschaften des Wassers. Hervorzuheben ist der oxidative Abbau der organischen Wasserbelastungsstoffe durch Ozon. Die Nachteile des Ozons liegen darin, daß es in Wasser sehr schwer löslich ist, relativ schnell zerfällt und wegen seiner erheblichen Toxizität im Beckenwasser überhaupt nicht vorhanden sein sollte. Das führt dazu, daß Ozon nicht als Depotoxidans und -desinfiziens im Beckenwasser auftreten kann, jedoch mit großem Reinigungsvorteil bei der Wasseraufbereitung außerhalb des Badebeckens einsetzbar ist. Gegenüber einer reinen Chloranwendung zur Wasseraufbereitung verhilft das Ozon bei der kombinierten Anwendung von Chlor und Ozon, erhebliche Mengen an Chlor einzusparen. Nach dem Stand der Technik liegen die Verhältnisse dann stets so, daß das dem Becken entnommene Rohwasser nach wenigstens einem Filtrationsschritt zunächst mit Ozon im Überschuß behandelt wird, um die im Rohwasser befindlichen Mikroorganismen abzutöten bzw. zu inaktivieren und die organischen Belastungsstoffe abzubauen, und daß nach der Ozonung die Chlorung zum Reinwasser erfolgt. welches dem Becken zugeführt wird. Wegen der Toxizität des Ozons wird konventionell das Wasser nach der Ozonung und vor der Chlorung über ein Aktivkohlefilter geleitet, an dem sich das im Wasser gelöste Ozon katalytisch zersetzt. Nach den KOK-Richtlinien darf das dem Becken zufließende Reinwasser dann keinen oder keinen größeren Ozongehalt als 0,01 g Ozon/m$^3$ Frischwasser aufweisen.

Nach dem Stand der Technik erfolgen die Ozonherstellung und die Ozonung des Rohwassers (gelegentlich im weiteren auch als Aufbereitungswasser bezeichnet, sofern das Rohwasser, ohne schon als Reinwasser vorzuliegen, wenigstens einem Reinigungsschritt bereits unterzogen worden ist) im näheren folgendermaßen.

Vorwiegend aus Luft, gelegentlich auch aus Sauerstoff, wird Ozon hergestellt, regelmäßig durch stille, elektrische Entladung bei Spannungen zwischen 6000 und 20000 V. Im Falle von Luft lassen sich dabei Ozon-Luft-Gemische mit einer Ozongaskonzentration um 2 Vol.% herstellen, wobei für die Erzeugung von 1 g Ozon beim Einsatz von trockener, atmosphärischer Luft ein Energieaufwand von 15 bis 30 Wh erforderlich ist. Unter den geschilderten Umständen darf das Ausgangsgas Luft oder Sauerstoffgas weder Feuchtigkeit, noch Staub oder katalytisch wirkende Substanzen enthalten, damit ein vorzeitiger Zerfall des gebildeten Ozons möglichst verhindert wird. Das eingesetzte saueratoffhaltige Gas muß daher mechanisch gereinigt und auf einen Taupunkt unter 228 K (-45°C) getrocknet sein.

Eine moderne Ozonerzeugungsanlage mit einer Leistung bis zu etwa 800 bis 1000 g Ozon pro Stunde stellt mit allen ihren notwendigen Nebenaggregaten und -einrichtungen einen Wert von näherungsweise 500.000 DM oder mehr dar, ist hochtechnisiert, verlangt einen nicht unerheblichen Wartungsaufwand und geschultes Wartungspersonal. Hinsichtlich der laufenden Betriebskosten fallen die Energiekosten bei einem Energieaufwand von 15 bis 30 kWh je kg Ozon stark ins Gewicht. Bei einem Ozonverbrauch von beispielsweise 1,15 kg/h wie für ein Hallenbad gemäß dem Bad Nr. 3 nach Tabelle 2 beträgt der Energieaufwand für die Ozonerzeugung somit etwa 17 bis 35 kWh je Stunde oder etwa 200 bis 400 kWh täglich bei angenommenem 12-Stundenbetrieb. Bei Freibädern, insbesondere Freibädern mit Wellenbetrieb, sind der Ozonverbrauch und dessen Kosten noch höher.

Das hergestellte Ozon wird über Injektoren oder in Wäschern, die nach dem Gegenstromprinzip arbeiten, in das Aufbereitungswasser eingebracht, wobei nach dem Stand der Technik je m$^3$ Wasser 0,5 bis 1,5 g Ozon verbraucht werden. Dieser Ozoneinsatz liegt hinsichtlich des an und für sich sehr guten Desinfektions- und Oxidationsvermögens des Ozons sehr hoch und erklärt sich durch die geringe Löslichkeit des Ozons in Wasser und die herrschende Anwendungstechnik, nach der das Ozon in Gegenstrombehältern oder in Reaktionsschlangen in Form mehr oder weniger großer Gasblasen des Luft-Ozon-Gemisches (Mischungsverhältnis Ozon : Luft etwa 1 : 50) bei Normaldruck das Wasser durchperlt oder - bei Reaktionsschlangen mit konventionell vertikalem Windungsfortlauf - mit der wäßrigen Phase schlecht durchmischt, über diese mehr oder weniger nur entlangstreicht. Daher haben die Reaktionszeiten des Ozons mit dem Wasser, d.h. die mittlere Verweilzeit des Wassers in den Reaktionsbehältern, auch zwischen 1 und 1,5 Minuten zu betragen.

Sämtliche bekannten Ozonungsverfahren arbeiten für das Ozon-Luft-Gemisch offen, wobei die vom Wasser nicht gelösten erheblichen Gasmengen aus dem Reaktionsgefäß über Kopf ausgeleitet werden, und wegen des physiologischen Erfordernisses eines ozonfreien Beckenwassers muß das ozonierte Aufbereitungswasser schließlich noch entozont werden.

3

Insgesamt ist diese Ozonungstechnik sowohl hinsichtlich der Investitions- als auch der Betriebskosten sehr teuer, wobei die Einsparungen an dem Desinfektionsmittel Chlor die Ozonungskosten nur zu einem Bruchteil aufwiegen. Der besondere Vorteil der Ozonung liegt allerdings in einer mittelbaren Auswirkung des verminderten Chloreinsatzes, indem bei der ozonunterstützten Badewasseraufbereitung dem Chlor gegenüber der reinen Chloranwendung nicht mehr die Doppelrolle der Reinigung des Rohwassers und der Einstellung und Aufrechterhaltung des Chlorspiegels an "freiem Chlor" im Beckenwasser zufällt, sondern nur noch die letztgenannte Aufgabe, was im Ergebnis dazu führt, daß im Beckenwasser geringere Konzentrationen an Reaktionsprodukten des Chlors, insbesondere an den lästigen Chloraminen, und allgemein eine bessere Wasserqualität auftreten, so daß auch die Umwälzintervalle für das Beckenwasser reduziert werden können.

Infolge der für die konventionelle Ozonungstechnik erforderlichen Anlagen und Kosten vermochte die Wasseraufbereitung mit Chlor und Ozon bislang keinen allgemeinen Eingang zu finden, wobei Länder mit hunderten bis tausenden von Badeanstalten bekannt sind, in denen eine Chlor-Ozon-Aufbereitung noch völlig unangewandt ist. Ferner wurde eine Umstellung von rein mit Chlor arbeitenden Schwimmbädern auf eine Chlor-Ozon-Aufbereitung des Badewassers nach dem Stand der Technik nie ausgeführt.

Von diesen Umständen aus nimmt die Erfindung ihren Ausgang.

Der Erfindung liegt die Aufgabe zugrunde, nicht nur eine ozonunterstützte Badewasseraufbereitung und -desinfektion sowohl aus technischen als auch aus Kostengesichtspunkten allgemein zu ermöglichen und insbesondere bislang nur mit Chlor als Wasseraufbereitungs- und -desinfektionsmittel arbeitende Bäder für eine Chlor-Ozon-Aufbereitung des Wassers technisch und wirtschaftlich sinnvoll nachrüstbar zu machen, sondern darüber hinaus auch die Gesamtbetriebskosten unter das bisherige Kostenniveau der rein chlorgereinigten Bäder zu senken. Die Nachrüstung soll sich dabei ohne technische Umbauten der vorhandenen Anlagen und unter Weiterverwendung der vorhandenen Einrichtungen bewerkstelligen lassen.

Zur Lösung dieser Aufgabe war zunächst das ganz grundsätzliche Problem des nach dem Stand der Technik teuren und verschwenderischen Ozoneinsatzes zu überwinden. Angelpunkt war also die Überlegung, einerseits den Wirkungsgrad des einzusetzenden Ozons zu steigern, um konsequenterweise daraus dann andererseits mit einem Ozonisator geringerer Kapazität, gegebenenfalls auch schwächerem Ozonerzeugungsgrad, auskommen zu können, der auch keine raumfüllende Anlage mehr darstellt, sondern ein handliches, unanfälliges und wartungsarmes Gerät sein sollte.

So wurde hinsichtlich des Ozonisators ein kompaktes, handliches Gerät (Abmessungen 40 cm × 40 cm × 20 cm) folgender Leistungsdaten entwickelt: maximale Leistungsaufnahme 50 W bei 220 V und 50 - 60 Hz, Luftdurchsatz 700 l/h, maximale Ozonerzeugung 1,2 g $O_3$/h.

Zur Steigerung des Wirkungsgrades des Ozons im Aufbereitungswasser griff die Überlegung Platz, durch Verkleinerung der Gasblasen des eingeleiteten Ozon-Luft-Gemisches dessen wirksame Oberfläche zu vergrößern, das Gasgemisch inniger mit dem Wasser zu vermischen, in einem geschlossenen System zu arbeiten, aus dem kein an Ozon abgereichertes Ozon-Luft-Gemisch entfernt werden muß,und Ozon nur in solchen Mengen einzusetzen, daß sich eine Ozonvernichtung und Einrichtungen hierzu erübrigen.

Gelöst wurde die Voraussetzung der innigen Durchmischung des Luft-Ozon-Gemisches mit dem Aufbereitungswasser erfindungsgemäß nun aufgrund der Ergebnisse folgenden Modellversuchs: Zweigt man aus einem in einem Rohr oder Schlauch geförderten Hauptstrom fließenden Wassers einen Teilstrom in einem Rohr oder Schlauch ab, bringt mittels eines Unterdruck erzeugenden Injektors in den Teilstrom etwa 40 % seines Durchsatzes an Luft ein, wobei das Luftvolumen auf den natürlichen atmosphärischen Druck bezogen ist, und fördert man das Wasser-Luft-Gemisch mit einer Strömungsgeschwindigkeit ab etwa 1,5 m/s durch eine Leitungsstrecke in Form einer Spirale aus mehreren in senkrechter Ebene verlaufenden Windungen, so verteilt sich die Luft in dem Wasser zu einem milchig aussehenden schaum- oder gischtartigen Verteilungszustand in Art eines Sprays, wobei dieser gischtartige Zustand bei der Zusammenführung mit dem Hauptstrom in diesem vorübergehend ersichtlich erhalten bleibt.

Unter Anwendung dieses gemäß der Erfindung entwickelten Verfahrens zur innigen Durchmischung von strömenden Flüssigkeiten und hoher Volumina darin nicht oder kaum löslicher Gase auf die Ozonung von Wasser, ergaben sich unter Verwendung des oben bezeichneten Ozonisators in praxi überraschende Ergebnisse, die nachfolgend skizziert und sodann anhand einer Figur und von tabellierten Vergleichsdaten näher erläutert werden.

In der praktischen Erprobung, vgl. hierzu auch die Tabellen 3 bis 5, bei Hallen- und Freibädern, für die die Wasseraufbereitung zuvor alleine mit Chlor, vornehmlich Chlorgas, vorgenommen worden war, wurde aus der Roh- oder Aufbereitungswasserringleitung von dem Strom des Aufbereitungswassers ein Teilstrom in der Größenordnung von 1,7 m³/h abgeleitet. In diesen wurden aus dem oben beschriebenen Ozonisator konstant etwa 1 g Ozon (maximal 1,2 g Ozon) in etwa 700 l Luft je Stunde eingeleitet und gemäß dem oben beschriebenen Verfahren mit dem Teilstrom durchmischt, der sodann mit dem Hauptstrom des Aufbereitungswassers wieder vereinigt wurde. Bakteriologische Teste deuten darauf hin, daß wenigstens 90 % der in dem Rohwasser zuvor enthaltenen Mikroorganismen unmittelbar nach der Zusammenführung in Sekundenbruchteilen lebensunfähig geworden waren. In dem Gesamtstrom wurde mit der vorhandenen Chloreinleitungsanlage das Wasser gechlort und als Reinwasser ins Badebecken geleitet. Das gesamte Leitungssystem war geschlossen, so daß keine Luft aus ihm entweichen, die aus dem Ozonisator stammende Luft also erst an den Reinwassereinleitungsstellen im Becken nach oben steigen konnte. Weder in den aufgefangenen, aufsteigenden Luftblasen noch im Beckenwasser ließ sich Ozon nachweisen. Langzeitversuche zeigten, daß unter Beibehaltung oder Verbesserung der früheren Konzentrationen an freiem Chlor, des Redoxpotentials und der Keimzahl das Beckenwasser sich zufolge dieser Ozonbehandlung - mit nur etwa einem Prozent der konventionell erforderlichen Ozonmenge - der Chlorverbrauch je nach Beckentyp und -betriebsart bis zu 70 % oder mehr senken ließ. Im weiteren wurde die Wasserqualität des Beckenwassers erheblich gesteigert, Augenreizungen und Geruchsbelästigungen verschwanden.

Bei sämtlichen Erprobungsbädern blieben die vorhandenen Einrichtungen des Wasseraufbereitungs- und Desinfektionssystems in Betrieb, und der einzige nennenswerte technische Eingriff bestand in der Einrichtung des Bypasses für den Rohwasserstrom zur Einleitung des Ozon-Luft-Gemisches aus dem handlichen Ozonisator und der oben genannten spiralförmig verlaufenden Leitungsanordnung des Bypasses als Mischstrecke für die innige Durchmischung des abgezweigten Rohwasserstromes mit der ozonhaltigen Luft.

Weder ein eigenes Reaktionsgefäß zur Gewährleistung einer bis zu 1,5-minütigen Verweilzeit des Rohwassers für dessen Ozonung noch ein Ozonvernichter zur Zerstörung des in dem Wasser enthaltenen unverbrauchten Ozons sind vonnöten.

Eine derartige Umstellung von bislang rein chlorgereinigten Bädern auf eine Chlor-Ozon-Aufbereitung des Rohwassers ist damit eine technisch einfache und billige, äußerst wirtschaftliche und überdies wasserqualitätssteigernde Maßnahme, wobei dieses Konzept der Chlor-Ozon-Wasseraufbereitung gemäß der Erfindung selbstverständlich auch bei der Neueinrichtung von Bädern in gleicher Weise vorteilhaft zum Tragen kommt. Einerseits im laufenden Betrieb erheblich billiger als das reine Chlorungsverfahren, sind unter Vermeidung der vergleichsweise immensen Erstellungsaufwendungen und der hohen Betriebskosten der konventionellen Ozonanwendung nun gemäß der Erfindung auch die Vorteile der Ozonung ohne einen im Vergleich zum Stand der Technik nennenswerte Sach- und Energieaufwand nutzbar.

Nachfolgend werden die Erfindung anhand zweier schematischer Figuren und ihre Leistungen im Vergleich mit dem Stand der Technik anhand von tabellarischen Übersichten näher erläutert.

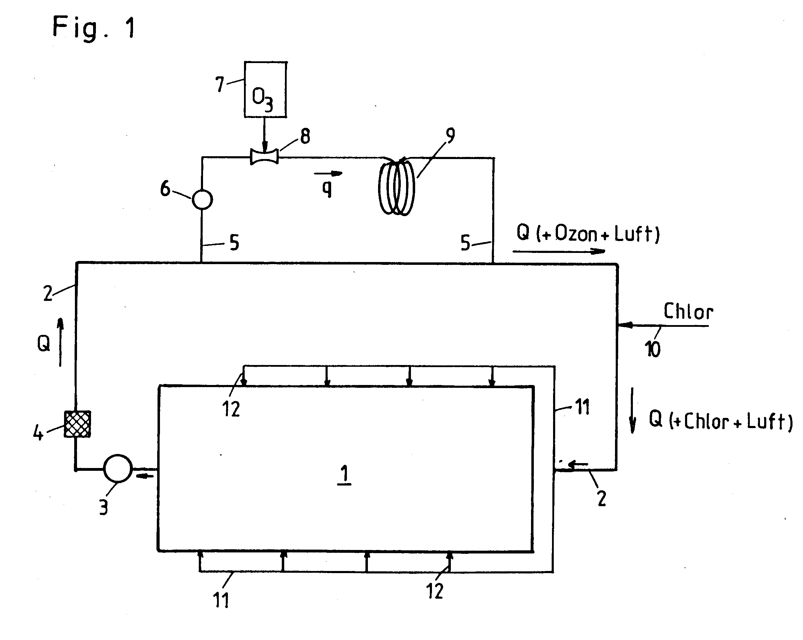

Fig. 1 zeigt im Schema den Wasserverlauf eines Schwimm- oder Badebeckens mit Chlorreinigung und gemäß der Erfindung zusätzlicher Ozonreinigung.

Aus dem Becken 1 und in das Becken 1 führt eine Ringleitung 2 für den Rohwasserabgang, die Aufbereitungsstufen des Wassers und die Reinwasserzuleitung. Das abgehende Rohwasser setzt sich dabei aus dem Schwall- und überlaufwasser und/ oder direkt abgezogenem Beckenwasser zusammen. Den Gesamtrohwasserstrom fördert wenigstens eine Pumpe 3, und wenigstens ein Filter 4 hält die in dem Rohwasser enthaltenen Schwebeteilchen und teilweise andere Verunreinigungen zurück, wobei die Anwendung von Flockungsmitteln, Filterhilfsmitteln usw. und der Einsatz weiterer Aufbereitungsmittel möglich ist; insoweit sei auf die Literatur verwiesen. Abgesehen von den Teilen 5 bis 9 ist die Anlage im wesentlichen konventionell, einschließlich der Chloreinspeisung 10 sowohl nach Art der Chlorchemikalie als auch der Technik der Chlorzudosierung. Bei Becken 1 mit Querdurchströmung gelangt das Reinwasser dann über Leitungszweige 11 und Zuführungen 12 in das Becken 1 zurück. Zusätzliche weitere Einrichtungen, etwa zur Regulierung des pH-Wertes des Beckenwassers oder automatische Meßanlagen, von Hand oder automatisch geregelte Dosiereinrichtungen und dergleichen sind nicht gezeigt.

Gemäß der Erfindung nun wird aus dem stündlichen Gesamtförderstrom $Q_h$ des Aufbereitungswassers über einen Bypass 5 ein von einer Boosterpumpe 6 geförderter stündlicher Teilstrom $q_h$ in der Größenordnung von 1,7 $m^3/h$ abgezweigt und mit einem Ozonluftstrom von vorzugsweise 1 g/h Ozon in etwa 700 l/h (bezogen auf den Atmosphärendruck) unbehandelter Luft aus dem Ozonisator 7 versetzt, wobei die Ozon-Luft-Einmischung vermittels eines Unterdruckinjektors 8 mit Wirbelkammer erfolgt, wonach das Wasser-Ozon-Gemisch in der Spirale 9 bei einer Strömungsgeschwindigkeit ab 1.5 m/s innig durchmischt und dann in den Hauptförderstrom eingeleitet wird. Hierbei beträgt der Förderstrom $Q_h$ des Rohwassers vorteilhafterweise etwa 100 $m^3/h$.

Die US-A-4176061 offenbart ein Verfahren und eine Vorrichtung zur Behandlung von Fluiden wie Wasser mit Ozon. Ein Ozongenerator mit einer Mehrzahl von Elektroden erzeugt Ozonluft, die mittels eines Aspirators in Form von Mikroblasen in Wasser eingebracht wird, sich in einer rohrförmigen Reaktionsstrecke mit Wasser vermischt und die darin enthaltenen Verunreinigungen oxidiert.

Nach der US-A-3 674 216 ist bekannt, zur Reinigung von stark bakterienhaltigen Abwässern einen Teil

5

des Bakteriengehalts zunächst mechanisch mittels hoch rotierender Bürstenräder herauszufangen, und dann zur weiteren Desinfizierung das so vorgereinigte Wasser aus einem Lagertank mittels einer Pumpe durch ein Venturirohr zu drücken, dabei durch den in dem Venturirohr erzeugten Unterdruck ein Luft-Ozon-Gemisch (Ozongehalt 0,5 bis 2 Vol%, entsprechend 0,8 bis 3 Gew.% Ozon) anzusaugen und in den Abwasserstrom einzumischen, und das Wasser-Ozonluft-Gemisch mit einer Verweilzeit von 10 bis zu über 30 Minuten solange durch eine lange Rohrleitung zu führen, bis das in das Wasser eingeleitete Ozon zu Sauerstoff zerfallen ist und sich der letztere mit einem Teil der zugeführten Luft in dem Wasser gelöst hat. Ist das aus dem langen Reaktionsrohr austretende Wasser dann nicht ausreichend bakterienfrei, wird ein Teil des Wasserstromes im Kreislauf zurückgeführt und mit weiterem Abwasser der beschriebenen Reinigungsbehandlung unter Verwendung von Ozon unterworfen.

Zur Erzielung einer feinen, schaum- oder gischtartigen Zerteilung des Ozonluft-Wasser-Gemisches in der Spirale 9 hat es sich als befriedigend herausgestellt, wenn die als Durchmischungsstrecke dienende Spirale 9 (Mischspirale) ein aus wenigstens drei Windungen in vertikaler Ebene bestehendes längliches Oval mit einer Höhe von etwa 1,5 m darstellt und die Mischstrecke 6 bis 10 m beträgt.

Eine für die Erfindung typische Vorrichtung zur Ozonung des Rohwassers umfaßt als wesentliche Teile einen Ozonisator 7 mit einem Luftdurchsatz von 700 l/h nicht vorbehandelter oder vorzubehandelnder atmosphärischer Luft und einer Ozonerzeugungsrate von 1 bis 1,2 g/h Ozon und eine Mischspirale 9 für 6 bis 10 m Mischstrecke in drei Windungen eines Rohres oder Schlauches von 3/4 Zoll (1,9 cm)Durchmesser, d.h. einem Strömungsquerschnitt von 2,85 cm$^2$; die Mischspirale 9 ist vorzugsweise hochoval und nimmt dabei vorzugsweise eine Höhe von 1,5 m ein; der in ihr herrschende, durch die Pumpe 6 aufrechterhaltene, Förderdruck liegt etwa 1,5 bar über dem Förderdruck des Rohwasserhauptstromes, der bei etwa 0,7 bar über dem Atmosphärendruck liegen kann.

Typische Betriebsdaten sind ein Rohwasserdurchsatz $q_h$ von 1,7 m$^3$/h durch die Spirale 9. Daraus resultierte zunächst ohne Zumischung eines Ozon-Luft-Stromes eine Strömungsgeschwindigkeit von 1,66 m/s (1,7 m$^3$/h : 2,85 cm$^2$) in der Spirale 9. Nun werden dem Rohwasserstrom $q_h$ aber 700 l/h Ozonluft zugesetzt, deren Volumendurchsatz unter Berücksichtigung eines Druckes von 0,7 bar Überdruck in der Rohwasserhauptstromleitung und von 1,5 bar Überdruck darüber in der Mischspirale mit etwa 0,3 m$^3$/h Ozonluft veranschlagt werden kann, so daß sich für den Wasser-Ozonluft-Strom in der oben definierten Mischspirale 9 tatsächlich eine Strömungsgeschwindigkeit von etwa 2 m/s ermittelt. Aufgrund dieser vergleichsweise hohen Strömungsgeschwindigkeit, des Binnendruckes und der erzwungenen Umlenkungen in den Spiralwindungen treten hohe Turbulenzen und die erwünschte feinste Durchmischung der Ozonluft und des Rohwassers in dem Bypass ein; eine zusätzliche Mischwirkung dürfte durch eine Gegenstromtendenz in den absteigenden Teilen der Spirale 9 zustandekommen. Die hohe Strömungsgeschwindigkeit, mit der der aerosolartige Nebenstrom in den Rohwasserhauptstrom hineinschießt, sorgt schließlich für einen Durchmischungszustand, in dem die Ozonluft ohne Separierung mit hoher Austauschfläche für eine effektive Ozonung im Rohwasser vorliegt.

Während nach dem Stande der Technik für die Ozonung bis zu 1,5 g Ozon je m$^3$ Rohwasser einzusetzen sind, für eine Kontaktzeit zwischen Wasser und Ozon bis zu 1,5 Minuten zu sorgen und das in dem Wasser gelöste oder mitgeschleppte unverbrauchte Ozon zu vernichten ist, hat es sich im Rahmen der Erfindung für völlig ausreichend erwiesen, je m$^3$ Rohwasser etwa nur 0,01 g Ozon einzusetzen, d.h. also von einer Eingangskonzentration auszugehen, die im wesentlichen überhaupt nur so hoch liegt wie der nach DIN 19 643 im Rohwasser nach Verlassen des Ozonvernichters gerade noch zulässige Ozongehalt des Wassers, so daß gemäß der Erfindung weder eine Ozonvernichtung vorgesehen zu sein braucht, noch überhaupt ein Reaktor für die Ozonung, die sich gemäß der Erfindung im Strömungsrohr für den Rohwasserhauptstrom selbst vollzieht. Leitungswege zwischen dem Ort der Vereinigung des ozonhaltigen Nebenstromes mit dem Rohwasserhauptstrom und dem Eintritt ins Badebecken zwischen üblicherweise 6 bis 20 m sind vollkommen sicher ausreichend. Da gemäß der Erfindung auf eine Ozonvernichtung verzichtet werden kann, bleibt es letztendlich auch unerheblich, ob die Zudosierung des Desinfektionsmittels Chlor vor oder nach der Ozonung erfolgt. Beides ist möglich.

Es sei angemerkt, daß hier ein Standardverfahren beschrieben worden ist, und daß beispielsweise Abweichungen, so etwa in einer Erhöhung der stündlichen Durchflußmenge $q_h$ für den Bypasstrom des Rohwassers je einzusetzender Ozonmenge von 1 bis 1,2 g/l - und damit eine Erhöhung der Durchfließgeschwindigkeit durch die Mischspirale 9 - durchaus möglich oder günstig sind.

Geht man von Ozongeneratoren wie dem oben genannten aus, die bei voller Leistung 1,2 g Ozon in 700 l Luft stündlich erzeugen, läßt sich nach dem Verfahren gemäß der Erfindung ein Beckenwasservolumen von 600 bis 800 m$^3$ einwandfrei konditionieren, wenn man - realistischerweise - Umwälzintervalle von etwa 5 bis 7 Stunden für das gesamte Beckenwasser voraussetzt. Die Chloreinsparungen betragen dann bis zu 70 % oder mehr des Chlorverbrauchs der reinen Chlorungstechnik, wobei überdies noch eine Verbesserung der Badewasserqualität einhergeht. Für größere Beckenwasservolumina wären mehrere Ozonisatoren einer Kapazität von 1,2 g/h erforderlich, die neben- oder hintereinandergeschaltet zum Einsatz gebracht werden können.

Einige Leistungen der Erfindung werden nun anhand der Tabellen 1 bis 5 näher erläutert, wobei die Tabellen 1 und 2 Anforderungen an das Beckenwasser (Tabelle 1) bzw. den praktischen Stand der Technik (Tabelle 2) für die Bundesrepublik Deutschland berühren, während die Angaben nach den Tabellen 3 bis 5 Anforderungen an die Beckenwasserqualität nach US-amerikanischen Erfordernissen und im Vergleich dazu die Erprobung der Erfindung bei Bädern in den USA betreffen. Während in der Bundesrepublik Deutschland bundeseinheitliche Normen gelten, können die für ein "sicheres Badewasser" in den USA verlangten Wasserwerte nach Maßgaben bis herab zur kommunalen Verwaltungsebene variieren.

Die deutschen Vorschriften nach DIN 19 643 (Tabelle 1) gehen, kurzgefaßt, von folgenden Erkenntnissen aus. Faktoren, die die Wirkung von Chlorpräparaten für die Wasserdesinfektion beeinflussen sind der Gehalt an freiem wirksamen Chlor ("freies Chlor" insbesondere als $Cl_2$, unterchloriger Säure oder Hypochlorit), d.h. der Chlorüberschuß im Badewasser, die Einwirkungszeit, der Verschmutzungsgrad und die Verkeimung des Wassers; daneben spielen die Temperatur und insbesondere auch der pH-Wert des Wassers eine Rolle. Wie vor etwa 15 Jahren auch erkannt wurde, besteht ein Zusammenhang zwischen dem durch Chlor erzeugten Redoxmilieu und der Keimabtötung bzw. Virusinaktivierung, wobei die Abtötungsgeschwindigkeit nicht vom Gehalt an freiem Chlor bei vorgegebenem pH-Wert abhängig ist, sondern durch die Höhe des Redoxpotentials bei jeweils vorhandenem pH-Wert bestimmt wird. Die Höhe des Potentials ist dabei abhängig vom Konzentrations-Verhältnis Oxidationsmittel (z.B. Chlor) zum Reduktionsmittel (z.B. Verunreinigungen). Das Redoxpotential, das in einem gechlorten Wasser vorliegt, ist also ein genaues Maß für die oxidierende und desinfizierende Wirkung des vorhandenen Desinfektionsmittels, wobei die momentan vorliegende Verunreinigung des Wassers berücksichtigt ist und mit in die Messung eingeht. Derselbe Chlorgehalt kann beispielsweise einem Wasser ein niedriges oder ein hohes Redoxpotential erteilen, ausschlaggebend ist dabei immer die Konzentration der Verunreinigungen im Wasser. Das bedeutet auch, je mehr Verunreinigungen aus dem Badewasser entfernt werden, etwa durch Flockung und Filtration, desto besser ist die Desinfektionswirkung des Chlors und desto geringer ist zugleich eine Chlorzehrung im Beckenwasser durch Verbrauch von freiem Chlor unter Bildung von "gebundenem Chlor" in Form von Chloraminen aus insbesondere Zersetzungs-Produkten des Harnstoffes (eingebracht unter anderem durch Schweiß und Urin der Badegäste). Wie bereits weiter vorne erwähnt, sind es gerade die Chloramine, die für die Augen- und Hautreizungs- und Geruchsprobleme verantwortlich sind, und nicht das freie wirksame Chlor, hinsichtlich welchem es aufgrund technischer Pannen beobachtet wurde, daß selbst ein Gehalt über 8 g freiem Chlor je $m^3$ Badewasser bei den Badegästen weder zu Augenreizungen noch zu Geruchsbelästigungen führte.

Wie weiter, und wie ebenfalls oben schon erwähnt, erkannt worden ist, übt Ozon eine ausflockende Wirkung aus und baut organische Belastungsstoffe des Wassers oxidativ ab, so daß sich durch den Einsatz von Ozon auch diejenigen Wasserverunreinigungen reduzieren lassen, die zur Chloraminbildung führen, wodurch sich sowohl der Chloreinsatz erniedrigen als auch die Badewasserqualität steigern lassen.

Für die praktischen Anforderungen an das Beckenwasser sind unter Berücksichtigung dieser vorstehend genannten Erkenntnisse und Erfahrungen - zu denen auch gehört, daß eine vollständige E.coli-Keimtötung im Badewasser bei pH 7,0 innerhalb einer Minute ein (pH- und temperaturabhängiges) Redoxpotential von wenigstens 650 mV (gemessen gegen eine gesättigte Kalomel-Bezugselektrode) bzw. von 685 mV (gemessen gegen eine Silber/3,5 m KCl/Silberchlorid-Bezugselektrode) bei 25°C vonstatten geht - die in Tabelle 1 niedergelegten Richtwerte festgelegt worden.

Mit kleinen Unterschieden je nach der Verfahrens-Kombination (Zusammenwirkung insbesondere von Filteranlagen und eingesetzten Desinfektionschemikalien) sollen danach einerseits für eine verläßliche Desinfektionswirkung und andererseits für eine annehmbare Wasserqualität das Becken- oder Badewasser eine Konzentration an freiem Chlor zwischen 0,3 und 0.6 $g/m^3$, an gebundenem Chlor von maximal 0,5 $g/m^3$ und ein Redoxpotential von wenigstens 700 bis 770 mV (je nach pH-Wert des Badewassers und der verwendeten Bezugselektrodenart) aufweisen. Die in Tabelle 1 aufgeführten weiteren Daten wurden an früherer Stelle bereits erläutert. Die angegebenen Richtwerte beziehen sich auf Süßwasser; bei anderen Wässern, wie Meerwasser oder Thermalwasser, gelten vergleichsweise geringe Abweichungen.

In Tabelle 2 finden sich einige zu drei nach DIN 19 643 betriebenen deutschen Bädern erhaltene Betriebs- und Verbrauchsdaten zusammengestellt, wobei das Badewasser der Bäder 1 und 2 nur mit Chlorgas und von Bad 3 nach der konventionellen Ozonungs-Chlorungs-Technik aufbereitet werden. Bei aller Lückenhaftigkeit vermittelt die Tabelle 2 jedoch einen Eindruck über den praktischen Chemikalienverbrauch, der sowohl absolut als auch auf den Verbrauch je Öffnungsstunde und auf das Gesamtbeckenvolumen normiert angegeben ist. Die Werte sind Mittelwerte. Verbrauchsspitzen bei voller Badeauslastung oder

EP 0 237 793 B1

Chemikalienverbräuche außerhalb der Öffnungszeiten (beispielsweise für die Wasserkonditionierung für den nächsten Tag einschließlich einer eventuellen Schockchlorung über Nacht) sind in die angegebenen Mittelwerte einbezogen. Ohne nähere Spezifizierung mußte ferner die stündliche tatsächliche Chemikalienzudosierung je m$^3$ Rohwasser bleiben, doch läßt sich ein solcher spezifischer Verbrauch unter der realistischen Annahme von Umwälzzeiten von 5 bis 7 Stunden je Gesamtvolumen der Beckenfüllung abschätzen. Die Angaben zu den Chlorkonzentrationen bei Bad 1 betreffen die über einen längeren Zeitraum beobachteten Schwankungen, und die unterstrichenen Werte sind die am häufigsten gemessenen. Der geringere Chlorverbrauch bei Bad 3 im Vergleich zu Bad 2 läßt sich zum einen auf den chemikalienverbrauchsgünstigeren Hallenbadbetrieb und zum anderen auf die zusätzliche Ozonung zurückführen.

Mit den eigentlichen Ergebnissen der vorliegenden Erfindung befassen sich die Tabellen 3 bis 5, in denen Verbrauchs- und Wasserdaten von Bädern in den USA gegenübergestellt sind, wobei die jeweils linke Spalte Angaben über den ursprünglich reinen Chlorungsbetrieb enthält und die rechte Spalte die korrespondierenden Werte nach Umstellung des Bades auf die ozonunterstützte Badewasseraufbereitung gemäß der Erfindung.

Diese Tabellen sind gemäß Tabelle 2 aufgebaut, wobei die dort gegebenen allgemeinen Erläuterungen auch hier zutreffen.

Hinsichtlich der Konzentrationen an freiem Chlor fällt auf, daß diese Werte die Normwerte nach DIN 19 643 erheblich übersteigen - erklärlich durch ein anspruchsvolleres Verständnis bzw. eine anders gelagerte Philösophie über ein "sicheres Wasser" nach US-amerikanischer Auffassung, bei der die Überlegung im Vordergrund steht, daß ein Badewasser mit Sicherheit nur dann unter allen Umständen keimfrei zu halten ist, sofern man für einen mehr als ausreichenden Überschuß an Desinfektionsmittel, sprich freiem Chlor, im Wasser sorgt, um auch bei einer etwaigen Stoßbelastung des Wassers stets noch eine ausreichende Oxidations- und Desinfektionsreserve zur Verfügung zu haben. Negativfolgen dieser erhöhten Chlorung, wie gesteigerter Chlorverbrauch und die damit verbundene Neigung zu einer erhöhten Chloramin-Bildung,werden in Kauf genommen. Unter diesem Aspekt nun wirken sich die Vorteile der Ozonung gemäß der Erfindung in einem stark reduzierbaren Chlorverbrauch und damit verbundener Verringerung der Konzentrationen an gebundenem Chlor besonders günstig aus.

Nachstehend werden die Tabellen 3 bis 5 zu Einzelfragen näher erklärt.

Bei Bad 5 handelt es sich um einen Whirlpool mit einer Wassertemperatur von 40° C, dessen Wasser nicht mit elementarem Chlor, sondern mit "Flüssigchlor" (als Natriumhypochloritlösung) aufbereitet wird. Ein besonderer Kostenfaktor liegt in der Verwendung von Mitteln zur pH-Einstellung und ferner von kostenintensiven Antischaummitteln, da das warme, stark aufgewirbelte Wasser wegen der Verunreinigungen, insbesondere durch die erhöhte Schweißabsonderung der Benutzer, zu einer unerwünschten Schaumbildung neigt. Bei Anwendung des Verfahrens und der Vorrichtung gemäß der Erfindung, d.h. nach Installation einer Anlage aus einem 1,2 g/h Ozon - 700 l/h Luft-Ozonisator 7 und einer Mischspirale 9 konnten die Chemikalienkosten unter gleichzeitiger Verdopplung der maximal auftretenden Konzentration an freiem wirksamen Chlor um 65 %, d.h. auf 35 % der früheren Chemikalienkosten gesenkt werden.

Bei Bad 7 sei auf die ganz hervorragende Reduzierung des Chlorgasverbrauchs um etwa 85 % beim Einsatz von vier der oben beschriebenen Ozonisatoren hingewiesen, wobei diese drastische Senkung sich folgendermaßen erklären läßt: Das Bad ist hochfrequentiert und bedurfte ursprünglich einer extrem hohen Chlorversorgung, da bei seinem Charakter als Wellenbad zugleich ein sehr hoher Chlorverlust in die Luft eintrat. Bei Ozonung gemäß der Erfindung ließ sich ein erheblicher Teil der durch Chlor im Rohwasser abzubauenden Verunreinigungen durch Ozon vernichten und für eine Chlorzehrung entziehen. Zufolge des nunmehr nur noch vergleichsweise geringen Chlorungsbedarfes wurde schließlich auch die Verlustrate an die Luft herabgedrückt.

Zu Bad 8, für das sich nach Umstellung von der reinen Chlorreinigung auf eine Ozonungs-Chlorungsaufbereitung des Wassers gemäß der Erfindung eine Reduzierung des Chlorgasverbrauchs im Mittel um etwa 65 % einstellte, fanden ferner breit angelegte und über gut zwei Monate verfolgte bakteriologische Untersuchungen mit folgenden Ergebnissen statt:

Es wurden je Woche drei bis vier Wasserproben an mehreren Stellen des Beckens entnommen und bakteriologisch auf E.coli und andere Keime untersucht und die Keimzahl je 100 ml Wasserprobe nach dem bekannten Coliform-Test bestimmt. Sämtliche Proben waren frei an E.coli und wiesen eine Keimzahl (MPN) unter 2,2, damit also sehr gute Werte auf. Ferner wurde bei der Badumstellung folgender Einlaufeffekt gefunden: Bei Inbetriebnahme der Anlage lag eine Keimzahl größer als 16 vor, die sich nach drei Tagen auf den über die Untersuchungszeit von zwei Monaten konstanten Betrag von unter 2,2 erniedrigt hatte. Zusätzliche Untersuchungen wurden wie folgt ausgeführt: Am Beckeneinlauf für das Reinwasser wurden bei laufender Ozonerzeugungsanlage eine Probe 1 entnommen, dann wurde der Ozonator abgestellt und nach 5 Minuten eine Probe 2 gezogen, und nach Wiederanstellen des Ozonisators entnahm man schließlich eine

EP 0 237 793 B1

Probe 3. Die bakteriologischen Tests an diesen Proben ergaben für die Proben 1 und 3 (mit Ozonbetrieb bei der Aufbereitung) ein nach den Vorschriften bakteriologisch nicht zu beanstandendes Wasser, während das Wasser bei Probe 2 (ohne Ozonbetrieb bei der Aufbereitung) den Erfordernissen nicht gerecht wurde.

Insgesamt wurde bei sämtlichen gemäß der Erfindung betriebenen Bädern von den Badegästen die gegenüber dem vorigen Zustand drastisch hinsichtlich Klarheit, Augen- und Hautreizungen und Geruchsbelästigung verbesserten Wasserwerte begrüßt. Für die Betreiber der Bäder stellten sich erhebliche Reduzierungen der laufenden Chemikalien- und Betriebskosten, ferner einer erleichterte Reinhaltung der Anstriche, Fliesen und Fugen der Badebecken ein, und das, wie gesagt, unter Beibehaltung und Weiterbetrieb der ursprünglichen Reinigungs-Einrichtungen für das Beckenwasser und nur durch die zusätzliche Installation eines oder mehrerer der genannten handlichen und billigen Ozonisatoren und die Einmischung von Ozon im Verhältnis von etwa 1 : 100 gegenüber dem konventionellen Ozonungsbedarf zum Rohwasser in ein nicht belüftetes und unter Druck stehendes Leitungssystem nach dem Verfahren gemäß der Erfindung.

Das Wesen des Verfahrens zur Aufbereitung und Desinfektion von Badewässern unter Verwendung von Chlor und Ozon läßt sich dahingehend zusammenfassen, daß es genügt, je 100 $m^3$/h Aufbereitungswasser konstant nur 1 bis 1,2 g/h Ozon in 700 l/h atmosphärischer Luft einzusetzen und das Aufbereitungswasser je nach Bedarf zur Einstellung und Aufrechterhaltung des gewünschten Redoxpotentials bzw. Gehalts des Beckenwassers an freiem Chlor zu chloren. Selbst wenn die Ozonung nicht ausreichen sollte, das Rohwasser tatsächlich bis zum geforderten Verkeimungsgrad herab zu desinfizieren, würde dieses Desinfizierungsdefizit durch die Chlorung beseitigt, wobei sich insgesamt noch immer eine erhebliche Senkung der Wasseraufbereitungs- und -desinfizierkosten einstellte.

Es sei angemerkt, daß sich die wirtschaftlichen Ergebnisse gemäß der Erfindung bei einer nach Maßgabe einer kontinuierlichen automatischen Beckenwasser-Kontrolle gesteuerten Zudosierung der desinfizierenden Chlorchemikalie ergeben, wobei die Wasserkontrolle über das Redoxpotential oder über die Konzentration an freiem Chlor des Badewassers vorgenommen werden kann.

Schließlich sei noch die Vermutung angestellt, daß sich der vorzügliche Mischeffekt der Spirale 9 und der daraus resultierende Schnellozonungseffekt nicht zuletzt auf die hohe Luftförderung im Verhältnis von 700 l/h Luft (bei Normaldruck) je - soweit es das gegebene Beispiel betrifft - etwa 1,7 $m^3$/h des abgezweigten Rohwasserstromes zurückzuführen ist, und daß gerade der hohe Luftanteil die beobachtete Zerteilung des in der Spirale auf wenigstens 1,5 m/s beschleunigten Massenstromes in ein Gasbläschen-Wassertröpfchen-Gemisch bewirkt. Nachzutragen sei hier noch, daß praktische Versuche zur Ozonung gemäß der Erfindung auch mit höheren Rohwasserströmen im Bypass 5, beispielsweise von 5 $m^3$/h, bei Verwendung von 700 l/h Ozonluft ebenso erfolgreich verliefen. Für die Ozonung kommt es letztlich also nur darauf an, den Ozonluft-Wasserstrom nach Maßgabe des Strömungsdurchmessers und der Länge der Spirale 9 derart zu beschleunigen, daß der beschriebene gischtartige Vermischungszustand eintritt und der so geartete ozonluftbeladene Teilstrom des Rohwassers für eine ausreichende Verwirbelung oder Durchmischung mit dem Rohwasserhauptstrom in diesen hineinschießt. Bei Ozonluftgemischen nach dem Anwendungsstand gemäß der bekannten Techniken, also mit Ozongehalten von 1 g Ozon in nur 45 bis 50 l Luft (vgl. u.a. Tabelle 2, Bad 3) könnte der gemäß der Erfindung auftretende Schnellozonungseffekt womöglich also ausbleiben; Vergleichsversuche hierzu sind, insbesondere wegen der vorzüglichen Leistungen der Erfindung unter Verwendung des konzipierten preiswerten 1,2 g/h Ozon - 700 l/h Luft - Ozongerätes 7 allerdings (noch) nicht ausgeführt worden.

Nachfolgend wird ein weiteres, jedoch ausführlicheres Beispiel zu den Ergebnissen hinsichtlich der Verbesserungen der Wasserqualität und der Chemikalieneinsparung bei Umstellung der Beckenwasseraufbereitung von einer ursprünglichen Aufbereitung und Desinfektion nur mit Chlorgas auf das Verfahren gemäß der Erfindung gegeben. Dabei wird insbesondere gezeigt, daß die Auswirkungen der Ozon-Chlor-Wasseraufbereitung gemäß der Erfindung nicht spontan auftreten, sondern daß das Wasserreinigungssystem - bei Umstellung von einer Chlorreinigung auf die Ozon-Chlor-Reinigung gemäß der Erfindung - eine Einlaufphase von bis zu mehreren Wochen durchläuft, bis sich stabile Verhältnisse einstellen. Insoweit sind also auch die zu den Beispielen gemäß der Tabellen 3 bis 5 wiedergegebenen Ergebnisse als Betriebsergebnisse nach Abschluß der Einlaufphase, d.h. nachdem sich das Reinigungssystem auf stabile Verhältnisse einreguliert hat, zu verstehen.

Bei einem deutschen Hallenbad mit zwei Schwimmbecken, deren Beckenwasser bisher nach DIN 19 643 konventionell unter Verwendung von Chlorgas aufbereitet und desinfiziert worden war, wurde zu jedem Becken ein Ozongerät gemäß der Erfindung (1,2 g Ozon in 700 l Luft je Stunde) nach dem in Fig. 1 gezeigten Prinzip installiert und in Betrieb genommen. Die ursprünglichen technischen Einrichtungen des Bades blieben unverändert.

Die Beschreibung der Schwimmbecken und einiger Betriebsdaten zur ursprünglichen Beckenwasseraufbereitung nur mit Chlorgas als Desinfektionsmittel und zur Beckenwasseraufbereitung mit Ozon und Chlor

9

gemäß der Erfindung sind in Tab. 6 zusammengestellt, wobei die Betriebsergebnisse zum Verfahren gemäß der Erfindung wiederum diejenigen Verhältnisse angeben, nachdem sich das Reinigungssystem stabilisiert hatte. Zur Benutzungsart der Becken sei noch erläutert, daß das Becken 9a ein übliches Becken für Schwimmer ist, während das Becken 9b insbesondere für Nichtschwimmer, Schwimmschüler und für die Benutzung durch Schulkinder beim Schwimmsportunterricht vorgesehen ist, und daß die Becken generell hohe Besucherzahlen aufwiesen.

Ab Inbetriebnahme im 24-h-Betrieb der Ozonungsanlagen gemäß der Erfindung wurden die Betriebsdaten der Becken 9a und 9b über einen Zeitraum von etwa dreieinhalb Monaten verfolgt und protokolliert, wobei die Bestimmung der Konzentration an gebundenem und an freiem Chlor im Beckenwasser dreimal täglich vorgenommen wurde, und zwar bei Beginn und bei Ende des Badebetriebes und am Mittag eines jeden Betriebstages. Die Ergebnisse zum Gehalt des Beckenwassers an gebundenem Chlor sind in Tab. 7 nach wöchentlichen Mittelwerten zusammengestellt. Diesen Werten sind die während zwei Wochen vor Beginn des Ozonungs-Chlorungs-Verfahrens gemäß der Erfindung täglich ermittelten Werte der Konzentration an gebundenem Chlor im Beckenwasser als Mittelwert vorangestellt, wobei darauf hingewiesen wird, daß im Bad 9 zu anderen Zeiten vorher durchaus auch höhere Werte im Bereich von 0,5 bis 0,6 gebundenes Chlor / $m^3$ Beckenwasser üblich waren und zur Aufrechterhaltung der geforderten Mindestkonzentration an freiem Chlor von 0,3 $g/m^3$ (vgl. Tab. 1) nicht zu vermeiden waren.

Man erkennt aus Tab. 7, daß sich die Konzentrationen an gebundenem Chlor von anfangs über 0,4 $g/m^3$ im Verlaufe von etwa 4 bzw. etwa 10 Wochen auf den hervorragenden Wert von 0,05 $g/m^3$ erniedrigen ließ, der dann konstant blieb. Während sich vor der Benutzung der Erfindung die nach DIN 19 643 erlaubte Maximalkonzentration an gebundenem Chlor (vgl. Tab. 1) nicht einhalten ließ und ständig überschritten wurde, ermöglicht die Erfindung nunmehr die Einhaltung der DIN-Bedingungen.

Am Bad 9 wurden nach Beginn der Ausübung des Verfahrens der Ozonung und Chlorung gemäß der Erfindung noch folgende weitere Vorteile festgestellt.

Bereits drei Tage nach Aufnahme des neuen Verfahrens war eine wesentliche Verbesserung der Wassertrübung erreicht worden.

Der frühere, zeitweise sehr starke Chlorgeruch im Hallenbad hatte sich nach Stabilisierung des Systems auf ein erträgliches Ausmaß gesenkt, und die früheren Klagen der Besucher über starke Augenreizungen verstummten; vielmehr wurde das Badewasser von den Badegästen jetzt als sehr angenehm empfunden.

Sowohl der Chlorverbrauch als auch die früheren Mengen an Flockungsmitteln konnten um 50 % gesenkt werden, ohne daß die nach DIN geforderte Mindestkonzentration an freiem Chlor im Beckenwasser unterschritten wurde.

Die Luftfeuchtigkeit im Hallenbad verminderte sich um etwa 10 %. Nach den DIN-Vorschriften sollen pro Badegast täglich 30 l Frischwasser zugesetzt werden. Diese Menge reichte vor Benutzung des Verfahrens gemäß der Erfindung jedoch nicht aus, so daß zur Erhaltung der geforderten Beckenwasserqualität früher bis zu 50 l Frischwasser je Badegast verbraucht werden mußten. Nach Stabilisierung des Wasseraufbereitungs- und -desinfektionssystems gemäß der Erfindung ließ sich der Frischwasserbedarf jedoch auf 30 l je Badegast reduzieren. Alleine aus dieser Tatsache schon resultiert für das Bad 9 eine ganz erhebliche Senkung der Betriebskosten, von denen sich jetzt 40 % der Kosten für den ständigen Frischwasserzusatz, für die Abwasserentsorgung und auch an Energiekosten zur Erwärmung des Frischwassers auf die Beckentemperatur einsparen lassen.

Soweit die Erfindung bis hierher beschrieben worden ist, war vorausgesetzt gewesen, daß die erfindungsgemäße Ozonung des Rohwassers mit nachfolgender Chlorung gemäß dem in Fig. 1 illustrierten und dazu beschriebenen Vorrichtungs- und Verfahrens-prinzip stattfindet; das heißt, daß die aus dem Ozonisator 7 erhaltene und in den Bypass 5 eingespeiste Ozonluft mit dem abgezweigten Rohwasser in einer Spirale 9 mit vertikalen Windungen zu einem gischtartigen Gemisch vereinigt wird, und daß die Zugabe des Chlorungsmittels, nämlich insbesondere Chlorgas, gegebenenfalls auch "Flüssigchlor" in Form einer Natriumhypochloritlösung, erst anschließend in den mit der Ozonluft versetzten Hauptstrom Q des Rohwassers eingeleitet wird. Auf diesem Verfahren beruhen auch die in den Tabellen 3 bis 7 vorgestellten Beispiele zur Erfindung.

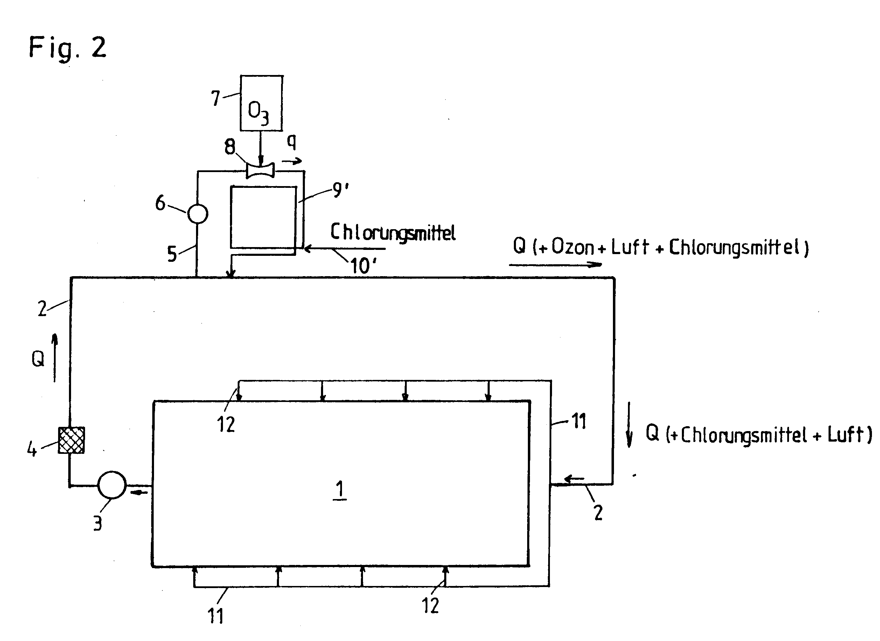

Jedoch konnte festgestellt werden, daß als "Mischkammer" mit einem aufsteigenden Rohrverlauf zur Ausbildung eines gischtartigen Durchmischungszustandes des Ozonluft-Wasser-Stromes in dem als Beschleunigungsstrecke wirkenden Bypass 5 nicht unbedingt eine Spirale 9 vorgesehen zu sein braucht, sondern daß als verwirbelnde Mischstrecke mit vertikaler Zirkulation grundsätzlich auch eine Rohranordnung mit linearen vertikalen und horizontalen Strecken die gewünschte Ausbildung eines gischtartigen Durchmischungszustandes des Ozonluft-Wasser-Stromes in dem Bypass 5 liefert. Eine derartige mit der Funktion einer Spirale 9 gleichwirkende, rahmenartige Zirkulationsstrecke in vertikalen Ebenen ist in Fig. 2 gezeigt und wird nachfolgend zur Unterscheidung von einer ovalförmigen Spirale 9 als "Rechteckspirale" 9' bezeichnet. Für die Ausübung des Verfahrens gemäß Fig. 1 kann statt einer vorzugsweise ovalen Spirale 9 also auch eine Rechteckspirale 9' verwendet werden.

Ferner wurde festgestellt, daß es nicht ohne Einfluß bleibt, ob die Zudosierung des Chlorungsmittels so wie in Fig. 1 gezeigt, also nach Einmündung des Bypasses 5 in den Hauptstrom Q, erfolgt, oder ob man das Chlorungsmittel schon in die Spirale 9 bzw. 9' einspeist. Eine derartige Anordnung, bei der die Einspeisung des Chlorungsmittels in eine Rechteckspirale 9' stattfindet, ist in Fig. 2 schematisch illustriert.

Fig. 2 unterscheidet sich von Fig. 1 durch die Ausgestaltung des Bypasses 5 und den Ort der Einleitung des Chlorungsmittels. Statt einer vorzugsweise ovalen Spirale 9 dient hier als Durchmischungsstrecke eine Rechteckspirale 9', und die Einleitung des Chlorungsmittels erfolgt anstatt an einem Ort 10 nach der Einmündung des Bypasses 5 in die Ringleitung 2 des Gesamtwasserstromes Q nun an einem Ort 10' in die Rechteckspirale 9'.

Die Rechteckspirale 9' kann hinsichtlich des Rohrquerschnitts und der Länge der in den vertikalen Ebenen erfolgenden Zirkulation des Fluids, welches zunächst aus dem abgezweigten Rohwasserteilstrom q und der Ozonluft besteht und dann zusätzlich das gasförmige oder flüssige Chlorungsmittel enthält, wie die Spirale 9 bemessen sein, auf deren Beschreibung weiter oben verwiesen wird.

Vorzugsweise bildet die Rechteckspirale 9' nur zwei vertikale Zirkulations- oder Umlaufebenen aus und nimmt dabei vorzugsweise eine Höhe von etwa 1,25 m und eine Breite von etwa 1 m ein. Unter den weiter oben zur Spirale 9 beschriebenen Betriebsbedingungen (Rohwasserstrom $q_h$ im Bypass 5 etwa 1,7 $m^3$/h; Ozonluft: etwa 1,2 g/h Ozon in etwa 700 l/h Luft) liegt der Förderdruck in der Spirale 9' bzw. im Bypass 5 vorzugsweise etwa 1,5 bis 2,5 bar über dem Druck in der Leitung 2 des Wasserhauptstromes und durchströmt den Bypass 5 mit einer Geschwindigkeit von vorzugsweise etwa 2 bis 3,5 m/s. Ein typischer innerer Rohrdurchmesser für eine Spirale 9' ist beispielsweise 2,8 cm, ebenso auch für eine Spirale 9. Soll bei dem Verfahren, das Chlorungsmittel in die Durchmischungsstrecke des Bypasses 5 einzuleiten und nicht in den Wasserhauptstrom, anstatt einer Rechteckspirale 9' eine Ovalspirale 9 verwendet werden, liegt der Druck in der Spirale 9 dann vorzugsweise ebenfalls etwa 1,5 bis 2,5 bar über dem Druck in der Leitung 2 des Hauptwasserstromes und durchströmt den Bypass 5 ebenfalls mit einer Geschwindigkeit von vorzugsweise 2 bis 3,5 m/s.

An dieser Stelle sei zur Wirkung einer Spirale 9 bzw. 9' über die Erklärungen weiter oben hinaus noch erläutert, daß eine im wesentlichen nur durchgehend lineare und horizontale Rohrführung für den Bypass 5, also ein Bypass 5 ohne eine Mischstrecke (9, 9') mit vertikal verlaufenden Strecken, nicht bzw. weniger in der Lage wäre, die gemäß der Erfindung angestrebte gischtartige innige Durchmischung der geförderten flüssigen Phase (Rohwasserstrom q und gegebenenfalls flüssiges Chlorungsmittel) mit der eingeleiteten gasförmigen Phase (Ozonluft und gegebenenfalls Chlorgas) zu erzeugen. Denn es könnte in den horizontalen Rohrstrecken keine zusätzlich Mischwirkung zufolge einer Relativbewegung zwischen dem Flüssigkeitsstrom und den naturgemäß immer nach oben strebenden Gasblasen zustande kommen, und insbesondere würde eine Phasentrennung dahingehend auftreten, daß sich über der horizontal geförderten Flüssigkeit ein Gaspolster zwischen dem Flüssigkeitsstrom und der Rohrwand ausbildet.

Wie nun an einem in den USA betriebenen Freibad, dessen Beckenwasser ursprünglich nur mit Flüssigchlor (Natriumhypochlorit) aufbereitet und desinfiziert worden war, und das dann zunächst auf eine Ozon-Chlor-Reinigung nach dem in Fig. 1 illustrierten Verfahren und schließlich auf eine Ozon-Chlor-Reinigung nach dem in Fig. 2 illustrierten Verfahren umgestellt worden war, festgestellt werden konnte, ließ sich nach der ersten Umstellung (Ozonung gemäß der Erfindung und Zugabe des Chlorungsmittels (Flüssigchlor) in den Wasserhauptstrom Q hinter der Einmündung des Bypasses 5) eine Einsparung an dem Chlorungsmittel um 50 % erzielen, und nach der weiteren Umstellung (Ozonung gemäß der Erfindung und Zugabe des Chlorungsmittels in eine Spirale 9 bzw. 9') eine weitere Chlorungsmitteleinsparung auf etwa 30 % des ursprünglichen Verbrauchs.

Einige Daten dieses Bades sind in der Tab. 8 zusammengestellt.

Als Erklärung für diesen überraschenden und nicht ohne weiteres erklärbaren Effekt, daß gegenüber der Zugabe des Chlorungsmittels erst nach der Einmündung des Bypasses 5 in den Hauptstrom des umgewälzten Wassers nun eine Zugabe des Chlorungsmittels schon in die Spirale 9 bzw. 9' des Bypasses 5 zu einer Reduzierung des Bedarfes an Chlorungsmitteln führt - könnte ein Einfluß des Ozons auf die Reaktivität bzw. Selektivität des Chlorungsmittels, bzw. umgekehrt, ein Einfluß des Chlorungsmittels auf die Reaktivität bzw. Selektivität des Ozons, in Betracht gezogen werden. Während nämlich bei einer Verfahrensführung gemäß Fig. 1 die Chlorung erst dann stattfindet, nachdem das Ozon in dem Wasserstrom Q weitgehend oder völlig reagiert hat oder zerfallen ist, gelangt bei einer Verfahrensführung gemäß Fig. 2 das in die Spirale 9 bzw. 9' eingeleitete Chlorungsmittel in ein Medium höchster Ozonkonzentration.

Bei Ausübung des Verfahrens gemäß der Erfindung zur Aufbereitung und Desinfektion von Schwimm- und Badebeckenwasser unter Ozonung mit einem Ozonisator, der bis 1,2 g/h Ozon in 700 l/h Luft erzeugt, und begleitender Chlorung sollte daher vorzugsweise so vorgegangen werden, das Chlorungsmittel in die Mischspirale 9 bzw. 9' einzuleiten, und zwar unabhängig davon, ob Chlorgas oder ob eine Hypochloritlösung verwendet werden soll.

Aus den zur Erfindung bisher gegebenen Erläuterungen darf jedoch nicht geschlossen werden, daß sich die angestrebte innige Vermischung des Rohwassers in dem Bypass 5 mit der Ozonluft bzw. mit der Ozonluft und dem Chlorungsmittel unter Druck für die Erzeugung eines gischtartigen Vermischungszustandes des Wasser-Ozonluft-Fluids bzw. des Wasser-Ozonluft-Chlorungsmittel-Fluids, das dann in den Hauptstrom des Rohwassers unter erhöhter Geschwindigkeit eingeleitet wird, nur mittels einer Spirale 9 bzw. 9' erreichen ließe. Zur Erzielung eines derartigen gischtartigen Vermischungszustandes wären nämlich auch andere technische Einrichtungen grundsätzlich möglich. Wichtig ist nur, daß dieser Mischungszustand erzielt wird, so daß das den Bypass 5 in den Rohwasserhauptstrom hinein verlassende aerosolartige Fluid in dem Rohwasserhauptstrom einen Reaktionszustand ohne nennenswerte Separierung der Gasphase von der Flüssigkeitsphase und mit besonders hoher Austauschfläche zwischen der Gas- und der Flüssigkeitsphase entstehen läßt. Die Durchmischungs methode mittels einer Spirale 9 oder 9' mit vertikalen Zirkulationsebenen stellt allerdings eine technisch besonders einfach und zugleich wirkungsvoll zu realisierende Lösung des Gedankens der innigen, gischtartigen Gasbläschen-Wassertröpfchen-Gemischbildung dar.

Anschließend wird noch auf einen sicherheitstechnischen und auf einen praktischen Vorteil der Erfindung hingewiesen.

Während bei dem nach dem Stand der Technik für die Ozon-Chlor-Wasseraufbereitung unvermeidlichen hochleistungsstarken Ozonisatoren eigene Sicherheitsräume für den Ozonisator unabdingbar sind, lassen sich die zur Ausübung der Erfindung erforderlichen Ozonisatoren 7, deren Leistung maximal nur 1,2 g/h Ozon beträgt, ohne besondere Schutzmaßnahmen und ohne Bedenken in allgemeinen Räumen betreiben.

Ferner lassen sich ein Ozonisator 7 für den Ozonluftbedarf gemäß der Erfindung, eine Mischspirale 9 bzw. 9' mit Einlaß für das Chlorungsmittel, ein Dosierungsventil für das Chlorungsmittel und eine automatische Steuereinheit für das Dosierungsventil zu einer noch handlichen Geräte- und Steuereinheit in einem gemeinsamen Gehäuse unterbringen, was ganz erhebliche Vorteile bei der Installation und insbesondere bei der Nachrüstung von bislang rein durch Chlorung desinfizierten Bädern zur Ausübung des Verfahrens gemäß der Erfindung mit sich bringt.

Tabelle 1

Anforderungen an das Beckenwasser nach DIN 19 643.

| Verfahrenskombination: | | a) | b) | c) |
|---|---|---|---|---|
| a) Flockung + Filtrierung + Chlorung | | Chlor | | |
| b) Flockung + Filtrierung + Ozonung + Aktivkohlefilterung + Chlorung | | | Ozon + Chlor | |
| c) Adsorption an Aktivkohlepulver + Anschwemmfilterung mit Kieselgur und Aktivkohle + Chlorung | | | | Chlor |
| Ozondosierung, g Ozon/m$^3$ Rohwasser | | —— | 0,8-1,2 | —— |
| Konzentrationen im Beckenwasser, g/m$^3$ | | min/max | min/max | min/max |
| Ozon | | | – /0 * | |
| freies Chlor | | 0,3/0,6 | 0,2/0,5 | 0,3/0,6 |
| gebundenes Chlor, bei | pH 6,5-7,2 | – /0,3 | – /0,1 | – /0,3 |
| | pH 7,2-7,8 | – /0,5 | – /0,2 | – /0,5 |
| Redox-Spannung, mV gegen | | min / max | | |
| Hg/Hg$_2$Cl$_2$, bei | pH 6,5-7,2 | 700 / – | | |
| | pH 7,2-7,8 | 720 / – | | |
| Ag/AgCl, bei | pH 6,5-7,2 | 750 / – | | |
| | pH 7,2-7,8 | 770 / – | | |

* zulässig 0,01 g Ozon/m$^3$ Reinwasser unmittelbar vor Eintritt ins Becken

Tabelle 2

Betriebsdaten von Bädern einer deutschen Großstadt mit konventioneller Badewasseraufbereitung

| | Bad 1 | Bad 2 | Bad 3 |
|---|---|---|---|
| Benutzungsart des Beckens | Freibad, Sommerhochbetrieb | Freibad, Sommerhochbetrieb | Hallenbad, Mischbetrieb |
| Beckenvolumen, $m^3$ | | 4800 (3 Becken) | 4300 (6 Becken) |
| Wasserfläche, $m^2$ | | 2200 | 2600 |
| tägliche Öffnungszeit, h | 13 | 13 | 12 |
| Ozonung des Rohwassers Stand der Technik g/h Ozon | — | — | (3 Ozon-Anlagen) 1150 * |
| g/h Ozon/$m^3$ Beckenwasser | | | 0,267 |
| Chlorgasverbrauch | | 3,5 – 4 kg/h | 500 kg/3 Wochen** |
| g/h/$m^3$ Beckenvolumen | | 0,73 – 0,83 | 0,46 |
| pH-Wert Beckenwasser | | | 7,2 – 7,8 |
| Konzentration im Beckenwasser, g/$m^3$ | | | |
| freies Chlor | 0,5-2,0; 1,0 | | |
| gebundenes Chlor | 0,0-0.3; 0,1 | | |
| Redox-Spannung, mV im Beckenwasser, geg. | | | |
| Ag/AgCl | | | 650 – 700 |
| $Hg/Hg_2Cl_2$ | | | |
| Verfahrenskombination | | | b) gem.Tab. 1 |

\* Mischungsverhältnis Ozon : Luft = 1 g Ozon / 45 l Luft (bei Atmosphärendruck)

\** bei automatischer kontinuierlicher Messung der Konzentration an "freiem Chlor" im Beckenwasser und automatischer Chlorgasdosierung

Tabelle 3

Betriebsdaten ursprünglich konventionell nur durch Chlorung desinfizierter Bäder nach Umstellung auf die Ozon-Chlor-Aufbereitung des Beckenwassers gemäß der Erfindung im Vergleich (bei Bädern in den USA)

| | Bad 4 | | Bad 5 | |
|---|---|---|---|---|
| Benutzungsart des Beckens | Hallenbad | | Whirlpool 40 °C | |
| Beckenvolumen, $m^3$ | 605 | | ˙13.6 | |
| Wasserfläche, $m^2$ | | | | |
| tägliche Öffnungszeit, h | 24 | | 24 | |
| Ozonung des Rohwassers gemäß der Erfindung, g/h Ozon | — | 1,2 | — | 1,2 |
| g/h Ozon/$m^3$ Beckenwasser | — | 0,002 | — | 0,088 |
| Chemikalienverbrauch g/h/$m^3$ Beckenvolumen | x [1] | 0,65 x | y [2] | 0,35 y |
| pH-Wert Beckenwasser | | | | |
| Konzentration im Beckenwasser, g/$m^3$ freies Chlor | 1,0-1.5 [3] | 1,0-1.5 | 1,0-1,5 [3] | 1,0-3,0 |
| gebundenes Chlor | | | | |
| Redox-Spannung, mV im Beckenwasser, geg. Ag/AgCl | | | | |
| Hg/$Hg_2Cl_2$ | | | | |
| Filtersystem | Sandfilter | | Kieselgur, Drucksystem | |

[1] x = ursprünglich je Zeiteinheit verbrauchte Menge an Chlorgas

[2] y = Kosten an "Flüssigchlor" (Natriumhypochloritlösung), pH-Wertmitteln und an Chemikalien gegen schaumbildung

[3] = behördliche Auflage

Tabelle 4

Betriebsdaten ursprünglich konventionell nur durch Chlorung desinfizierter Bäder nach Umstellung auf die Ozon-Chlor-Aufbereitung des Badewassers gemäß der Erfindung im Vergleich (bei Bädern in den USA)

15

| | Bad 6 | | Bad 7 | |
|---|---|---|---|---|
| Benutzungsart des Beckens | Freibad, Sommerhochbetrieb | | Wellenbad, 14000-18000 Pers./Tag | |
| Beckenvolumen, $m^3$ | 600 | | 2650 | |
| Wasserfläche, $m^2$ | | | | |
| tägliche Öffnungszeit, h | 24 | | 24 | |
| Ozonung des Rohwassers gemäß der Erfindung, g/h Ozon | – | 1,2 | – | 4,8 |
| g/h Ozon/$m^3$ Beckenwasser | | 0,002 | | 0,0018 |
| Chlorgasverbrauch je Tag | 7-10 kg | 2,5-3,5 kg | 225-250 kg | 32-35 kg |
| g/h/$m^3$ Beckenvolumen | 0,5-0,7 | 0,17-0,24 | 3,5-3,9 | 0,5-0,55 |
| pH-Wert Beckenwasser | | | | |
| Konzentration im Beckenwasser, g/$m^3$ freies Chlor | 0,4-1,5 | 0,8-1,2 | 0,8-1,5 | 0,8-1,5 |
| gebundenes Chlor | | | | |
| Redox-Spannung, mV im Beckenwasser, geg. Ag/AgCl | | 700-800 | | |
| $Hg/Hg_2Cl_2$ | | | | |
| Filtersystem | | | Kieselgur, Unterdrucksystem | |

Tabelle 5

Betriebsdaten eines ursprünglich konventionell nur durch Chlorung desinfizierter Bädes nach Umstellung auf die Chlor-Ozon-Aufbereitung des Badewassers gemäß der Erfindung im Vergleich (betreffend ein Bad in den USA)

| | Bad 8 | |
|---|---|---|
| Benutzungsart des Beckens | Freibad, sommerlicher Hochbetrieb, Beobachtungszeit: 2 Mon. | |
| Beckenvolumen, $m^3$ | 500 | |
| Wasserfläche, $m^2$ | | |
| tägliche Öffnungszeit, h | 24 | |
| Ozonung des Rohwassers gemäß der Erfindung g/h Ozon | — | 1,2 |
| g/h Ozon/$m^3$ Beckenwasser | — | 0,0024 |
| Chlorgasverbrauch je Tag | 11,3-18 kg | 5,5-6 kg |
| g/h/$m^3$ Beckenvolumen | 0,9-1,5 | 0,46-0,48 |
| pH-Wert Beckenwasser | | (6,7-7,8); meist : 7,4 |
| Konzentration im Beckenwasser, g/$m^3$ freies Chlor | Mittel: 0,5 | (0,01-1,9); Mittel: 1,0 |
| gebundenes Chlor | | |
| Redox-Spannung, mV im Beckenwasser, geg. Ag/AgCl | | |
| Hg/$Hg_2Cl_2$ | | |
| Filtersystem | | |

Tabelle 6

Betriebsdaten von zwei Schwimmbecken eines deutschen Hallenbades vor und nach der Umstellung von der ursprünglich konventionellen Chlorung des Beckenwassers auf die Ozon/Chlor-Aufbereitung gemäß der Erfindung

| Benutzungsart des Beckens | Bad 9 | | | |
|---|---|---|---|---|
| | Hallenbad, Schwimmbecken (9a) | | Hallenbad, Lehrschwimmbecken (9b) | |
| Beckenvolumen, $m^3$ | 500 | | 200 | |
| Wasserfläche, $m^2$ | 250 | | 100 | |
| tägliche Öffnungszeit, h | 15 | | 15 | |
| Ozonung des Rohwassers g/h Ozon | – | 1,2 | – | 1,2 |
| g/h Ozon/$m^3$ Beckenwasser | | 0,0024 | | 0,006 |
| Chlorgasverbrauch | x | 0,5 x * | x | 0,5 x * |
| Konzentration im Beckenwasser, g/$m^3$ freies Chlor | | min. 0,3 | | min. 0,3 |
| gebundenes Chlor | 0,4 | 0,05 * | 0,4 | 0,05 * |
| Flockungsmittelverbrauch | y | 0,5 y * | y | 0,5 y * |
| Frischwasserbedarf je Badegast, Liter | 50 | 30 * | 50 | 30 * |
| Reinigung der Filter | in Abständen von 2 bis 5 Tagen | | | |

\*  Nach Stabilisierung des Beckenwassersystems (1 bis 2 Monate Einlaufphase); nähere Angaben zum Abfall der Konzentration an gebundenem Chlor im Beckenwasser enthält Tab. 7.

Tabelle 7

Zeitlicher Verlauf der Abnahme der Konzentration an gebundenem Chlor (g/$m^3$) im Beckenwasser bei den in Tab. 6 bezeichneten Becken nach der Betriebsumstellung auf die Chlor-Ozon-Reinigung gemäß der Erfindung. Die Chlorbestimmungen wurden täglich bei Beginn und Ende des Badebetriebes und mittags vorgenommen; angegeben werden hier allerdings die Mittelwerte einer Woche.

| | Becken 9a | | | Becken 9b | | |
|---|---|---|---|---|---|---|
| Uhrzeit der Chlorbestimmung | 07 | 12 | 22 | 07 | 12 | 22 |
| Reinigung nur mit Chlor; gebundenes Chlor $(g/m^3)$ * | 0,38 | 0,38 | 0,43 | 0,39 | 0,41 | 0,44 |
| Reinigung mit Ozon/Chlor gebundenes Chlor $(g/m^3)$ nach | | | | | | |
| 1 Woche | 0,33 | 0,34 | 0,35 | 0,34 | 0,36 | 0,37 |
| 2 Wochen | 0,21 | 0,24 | 0,26 | 0,21 | 0,24 | 0,27 |
| 3 Wochen | 0,19 | 0,16 | 0,21 | 0,17 | 0,21 | 0,25 |
| 4 Wochen ** | 0,15 | 0,17 | 0,19 | 0,20 | 0,28 | 0,36 |
| 5 Wochen | 0,05 | 0,07 | 0,09 | 0,24 | 0,27 | 0,31 |
| 6 Wochen | 0,05 | 0,05 | 0,06 | 0,18 | 0,19 | 0,32 |
| 7 Wochen | 0,05 | 0,06 | 0,06 | 0,16 | 0,14 | 0,18 |
| 8 Wochen | 0,05 | 0,06 | 0,06 | 0,10 | 0,12 | 0,15 |
| 9 Wochen | 0,05 | 0,06 | 0,08 | 0,08 | 0,09 | 0,11 |
| 10 Wochen | 0,05 | 0,05 | 0,05 | 0,06 | 0,09 | 0,10 |
| 11 Wochen | 0,05 | 0,05 | 0,05 | 0,05 | 0,06 | 0,07 |
| 12 Wochen | 0,05 | 0,05 | 0,06 | 0,05 | 0,05 | 0,08 |
| 13 Wochen | 0,05 | 0,05 | 0,07 | 0,05 | 0,06 | 0,06 |
| 14 Wochen | 0,05 | 0,05 | 0,05 | 0,05 | 0,05 | 0,05 |
| 15 Wochen | 0,05 | 0,05 | 0,05 | 0,06 | 0,06 | 0,06 |
| 16 Wochen | 0,05 | 0,05 | 0,05 | 0,05 | 0,05 | 0,05 |

\* Mittelwerte der letzten 2 Wochen vor Inbetriebnahme der Ozonanlage gemäß der Erfindung

\*\* In dieser Woche war die Ozonanlage für einen oder zwei Tage außer Betrieb genommen worden.

Tabelle 8

Betriebsdaten eines ursprünglich konventionell nur durch Chlorung desinfizierten Bades nach Umstellung auf die Ozon-Chlor-Aufbereitung des Beckenwassers gemäß der Erfindung, wobei das Chlorungsmittel Natriumhypochloritlösung entweder nach Einmüdung des Bypasses 5 in den Hauptwasserstrom oder in die Spriale 9 bzw. 9' des Bypasses eingegeben wurde.

Die angegebenen Verbrauchswerte für das Chlorungsmittel beziehen sich auf das stabilisierte Reinigungssystem und auf eine Redox-Spannung des Beckenwassers von im Mittel etwa 750 mV und eine Konzentration an freiem Chlor im Beckenwasser von im Mittel etwa 0,4 $g/m^3$.

EP 0 237 793 B1

| | Bad 10 | | |
|---|---|---|---|
| Benutzungsart des Beckens | Freibad, Hochsommer 50 Personen pro Tag | | |
| Beckenvolumen, $m^3$ | 200 | | |
| Wasserfläche, $m^2$ | 130 | | |
| tägliche Öffnungszeit, h | 11 | | |
| Ozonung des Rohwassers g/h Ozon | 1,2 | | |
| g/h Ozon / $m^3$ Beckenwasser | 0,006 | | |
| Ort der Zugabe des Chlorungsmittels | direkt ins Becken | nach Bypass 5 | in die Spirale 9, 9' |
| Verbrauch an Flüssigchlor, l/Tag (Mittelwert) | 18,8 | 9,4 | 5,6 |

**Patentansprüche**

1. Verfahren zur Aufbereitung und Desinfektion von Schwimm- und Badebeckenwasser durch Ozonung und Chlorung unter Verwendung eines aus einem Ozonisator stammenden Ozon-Luft-Gemisches und eines Chlorungsmittels, insbesondere Chlorgas, umfassend wenigstens die Verfahrensschritte: Entnahme von Beckenwasser als Rohwasser und Filtrierung des Rohwassers durch wenigsten eine Filtereinheit, Abzweigung eines Teilstromes aus dem Hauptstrom des Rohwassers über einen Bypass und Einmischung der Ozonluft in den Teilstrom des Rohwassers, Vereinigung des ozonlufthaltigen Teilstroms des Rohwassers mit dem Hauptstrom des Rohwassers, Chlorung des Rohwassers und Rückführung des geozonten und gechlorten Rohwassers als Reinwasser in das Becken,
dadurch gekennzeichnet, daß man zur Ozonung von bis zu je 100 $m^3/h$ Rohwasser aus dem Rohwasserstrom ($Q_h$) über den Bypass (5) einen Teilstrom ($q_h$) des Rohwassers von bis zu 5 $m^3/h$, vorzugsweise von 1,7 $m^3/h$, abzweigt, in den Teilstrom ($q_h$) einen Ozonluft-Strom von 1 bis 1,2 g/h Ozon in etwa 700 l/h Luft (bezogen auf den Atmosphärendruck) einleitet, das ozonhaltige Fluid in dem Bypass (5) in einen innigen, gischtartigen Durchmischungszustand versetzt, das gebildete ozonhaltige Fluid-Aerosol bei der Einmündung des Bypasses (5) in den Hauptstrom des Rohwassers hineinschießen läßt und ohne Entlüftung des geschlossenen Rohrleitungssystems (2) den geozonten und gechlorten Strom des entstandenen Reinwassers mitsamt der aus dem Ozonisator (7) stammenden Luftmenge in das Becken (1) einleitet.

2. Verfahren nach Anspruch 1, gekennzeichnet durch die Verwendung eines Ozonisators (7) mit einer Ozonerzeugungsrate von maximal 1,2 g/h Ozon je 700 l/h eingesetzter atmosphärischer Luft.

3. Verfahren nach Anspruch 1 oder 2, dadurch gekennzeichnet, daß man zur Erzeugung des gischtartigen Durchmischungszustandes für den durch den Bypass (5) gehenden Gas-Flüssigkeit-Fluidstrom den Fluidstrom durch eine aus einem Rohr oder einem Schlauch gebildete Spirale (9, 9') mit vertikalem

20

Strömungsumlauf unter einem Druck und mit einer Geschwindigkeit leitet, ausreichend für die Ausbildung des gischtartigen Durchmischungszustandes.

4. Verfahren nach Anspruch 3, dadurch gekennzeichnet, daß man das Chlorungsmittel, z.B. Chlorgas oder eine Natriumhypochloritlösung, in die Spirale (9, 9') einleitet.

5. Verfahren nach Anspruch 3, dadurch gekennzeichnet, daß man eine Spirale (9) verwendet, die bei 6 bis 10 m Leitungslänge drei Windungen in vertikaler Ebene aufweist und vorzugsweise die Gestalt eines vertikalstehenden Ovals einnimmt, und daß die Spirale (9) von einem Teilstrom ($q_h$) des Rohwassers von 1,7 m$^3$/h und einem Ozonluftstrom von 1 bis 1,2 g/h Ozon in 700 l/h Luft durchströmt wird, wobei in der Spirale ein Druck bis etwa 1,5 bar über dem Druck in der Leitung (2) des Hauptstromes des Rohwassers herrscht und die Spirale (9) mit einer Fluidgeschwindigkeit von etwa 2 m/s durchströmt wird.

6. Verfahren nach Anspruch 4, dadurch gekennzeichnet, daß man eine Spirale (9') verwendet, die zwei vertikale Strömungsumlaufebenen aufweist und die Gestalt eines Rechteckes einer Höhe von etwa 1,25 m und einer Breite von etwa 1 m einnimmt, daß man das Chlorungsmittel in die Spirale (9') einleitet, und daß man bei einem Druck in der Spirale von 1,5 bis 2,5 bar über dem Druck in der Leitung (2) des Hauptstromes des Rohwassers den aus dem Rohwasserteilstrom ($q_h$), der Ozonluft und dem Chlorungsmittel gebildete Fluidstrom mit einer Geschwindigkeit von 2 bis 3,5 m/s durch die Spirale (9') befördert.

7. Vorrichtung zur Ausübung des Verfahrens nach einem der Ansprüche 1 bis 6, gekennzeichnet durch eine Bypassleitung (5), eine in diese eingeordnete Beschleunigungspumpe (6), wenigstens einen hinter der Pumpe (6) an die Bypassleitung (5) angeschlossenen Ozonisator (7) einer maximalen Ozonerzeugungsrate von 1,2 g/h Ozon in 700 l/h atmosphärischer Luft, und, als Teilstrecke der Bypassleitung (5), eine als Durchmischungsstrecke für den durch die Bypassleitung (5) hindurchgehenden Gas-Flüssigkeit-Fluidstrom vorgesehene Spirale (9, 9') mit wenigstens zwei Strömungsumlaufebenen in vertikaler Richtung.

8. Vorrichtung nach Anspruch 7, dadurch gekennzeichnet, daß der Ozonisator (7) nach dem Prinzip der Unterdruckentsorgung vermittels eines Unterdruckinjektors (8) arbeitet.

9. Vorrichtung nach Anspruch 8, dadurch gekennzeichnet, daß der Unterdruckinjektor (8) eine Wirbelkammer zur Einmischung von Gasen in Flüssigkeiten aufweist.

10. Vorrichtung nach einem der Ansprüche 7 bis 9, dadurch gekennzeichnet, daß die Spirale (9) gebildet ist aus einem Rohr oder Schlauch eines inneren Durchmessers von 1,9 bis 2,8 cm, bei 6 bis 10 m Leitungslänge drei Windungen in vertikaler Ebene aufweist und vorzugsweise die Gestalt eines vertikalen Ovals von etwa 1,5 m Höhe einnimmt.

11. Vorrichtung nach einem der Ansprüche 7 bis 9, dadurch gekennzeichnet, daß die Spirale (9') zwei vertikale Strömungsumlaufebenen ausbildet und als Rechteck mit etwa 1,25 m Höhe und etwa 1 m Breite ausgebildet ist.

12. Vorrichtung nach einem der Ansprüche 7 bis 11, dadurch gekennzeichnet, daß die Spirale (9, 9') mit einem Anschluß für die Einleitung von Chlorgas oder einer chlorhaltigen Lösung ausgerüstet ist.

13. Vorrichtung zur Ausübung des Verfahrens nach einem der Ansprüche 1 bis 6, gekennzeichnet als transportable, kompakte Geräteeinheit, umfassend ein Teilstück einer Bypassleitung (5), einen daran angeschlossenen Ozonisator (7) einer maximalen Ozonerzeugungsrate von 1,2 g/h Ozon in 700 l/h atmosphärischer Luft, eine zwischengeordnete Spirale (9, 9,) als Durchmischungsstrecke und mit Einlaß für ein Chlorungsmittel, ein Dosierventil für das Chlorungsmittel und eine automatische Steuereinheit für das Dosierventil.

## Claims

1. A method for treatment and disinfection of swimming and bathing reservoir water through ozonization and chlorination using an ozone-air mixture originating from an ozonizer and a chlorination agent, in particular chlorine gas, comprising at least the process stages of withdrawing reservoir water as natural water and filtering the natural water through at least on filter unit, branching a partial stream from the main stream of natural water via a bypass and introducing ozone air into the partial stream of natural water, combining the ozone air-containing partial stream of the natural water with the main stream of natural water, chlorinating the natural water and re-cyling the ozonized and chlorinated natural water to the reservoir as pure water, characterized in that partial stream ($q_h$) of natural water of up to 5 m$^3$/h, preferably of 1.7 m$^3$/h, is branched from the natural water stream ($Q_h$) via the bypass (5) for ozonizing up to 100 m$^3$/h of natural water, an ozone air stream of 1 to 1.2 g/h of ozone in approximately 700 l/h of air (based on atmospheric pressure) is introduced in the partial stream ($q_h$), the ozone-containing fluid in the bypass (5) is brought to an intimate froth mixing condition, the ozone-containing fluid aerosol formed is blasted into the main stream of the natural water at the confluence of the bypass (5) and without aerating the closed conduit system (2) the ozonized and chlorinated stream of the resulting pure water is introduced into the reservoir (1) together with the air quantity originating from the ozonizer (7).

2. A method according to claim 1, characterized by the use of an ozonizer (7) with a maximum ozone-producing rate of 1.2 g/h of ozone per 700 l/h of added atmospheric air.

3. A method according to claim 1 or 2, characterized in that to produce the froth mixing condition for the gas-liquid fluid stream passing through the bypass (5) the fluid stream is conducted under a pressure and at a speed sufficient for forming the froth mixing condition through a spiral (9,9') formed from a pipe or hose with vertical flow circulation.

4. A method according to claim 3, characterized in that the chlorination agent, for example chlorine gas or a sodium hypochlorite solution, is introduced in the spiral (9,9').

5. A method according to claim 3, characterized in that a spiral (9) is used which, with a conduit lenth of 6 to 10 m, has three windings in the vertical plane and preferably takes the shape of a vertically extending oval, and that a partial stream ($q_h$) of natural water of 1.7 m$^3$/h and an ozone air stream of 1 to 1.2 g/h of ozone in 700 l/h of air flow through the spiral (9), whereby a pressure of up to approximately 1.5 bar above the pressure in the conduit (2) of the main of the natural water prevails in the spiral and flows through the spiral (9) at a speed of approximately 2m/s.

6. A method according to claim 4, characterized in that a spiral (9') is used having two vertical flow circulation planes and taking the shape of a rectangle with a height of approximately 1.25 m and a width of approximately 1.m, that the chlorination agent is introduced in the spiral (9'), and that at a pressure in the spiral of 1.5 to 2.5 bar above the pressure in the conduit (2) of the main stream of natural water the fluid stream formed from the natural water partial stream ($q_h$), the ozone air and the chlorination agent is conveyed through the spiral (9') at a speed of 2 to 3.5 m/s.

7. An apparatus for carrying out the method according to one of the claims 1 to 6, characterized by a bypass conduit (5), a booster pump (6) arranged therein, at least one ozonizer (7) connected to the bypass conduit (5) downstream of the pump (6) having a maximum ozone-producing rate of 1.2 g/h of ozone in 700 l/h of atmospheric air, and, as part of the bypass conduit (5), a spiral (9, 9') provided as a mixing chamber for the gas-liquid fluid stream passing through the bypass conduit (5) with a least two flow circulation planes in the vertical direction.

8. An apparatus according to claim 7, characterized in that the ozonizer (7) operates by the principle of low-pressure extraction by means of a negative pressure injector (8).

9. An apparatus according claim 8, characterized in that the negative pressure injector (8) has a whirling chamber for mixing gases in liquids.

10. An apparatus according to one of the claims 7 to 9, characterized in that the spiral (9) is formed from a pipe or hose with an internal diameter of 1.9 to 2.8 cm, has three windings in the vertical plane with a conduit length of 6 to 10 m and preferably takes the shape of a vertical oval with a height of approximately 1.5 m

**11.** An apparatus according to one of the claim 7 to 9, characterized in that the spiral (9') forms two vertical flow circulation planes and is designed as a rectangle with a height of approximately 1.25 m and a width of approximately 1 m.

**12.** An apparatus according to one of the claim 7 to 11, characterized in that the spiral (9, 9') is equipped with a connection for introducing chlorine gas or a chlorine-containing solution.

**13.** An apparatus for carrying out the method according to one of the claims 1 to 6, characterized as a transportable, compact apparatus unit comprising part of a bypass conduit (5), an ozonizer (7) connected thereto having a maximum ozone-producing rate of 1.2 g/h of ozone in 700 l/h of atmospheric air, a mixing spiral (9,9') disposed therebetween acting as a mixing chamber and with an inlet for a chlorination agent, a metering valve for the chlorination agent and an automatic control unit for the metering valve.

## Revendications

**1.** Méthode pour traiter et désinfecter par ozonisation et chloration l'eau d'une piscine ou d'un bassin en utilisant un mélange d'ozone et d'air issu d'un ozonisateur et un agent chloré, en particulier du chlore gazeux, comprenant au moins les étapes suivantes : extraire de l'eau du bassin sous forme d'eau primaire, filtrer cette eau primaire à travers au moins une unité de filtration, dériver à partir du courant principal d'eau primaire un courant partiel dans une conduite de dérivation et introduire de l'air contenant de l'ozone dans le courant partiel d'eau primaire, réunir le courant partiel d'eau primaire contenant de l'air et de l'ozone avec le courant principal d'eau primaire, chlorer l'eau primaire et ramener l'eau primaire chlorée et contenant de l'ozone dans le bassin sous forme d'eau purifiée, caractérisée en ce que, pour ozoniser jusqu'à 100 m$^3$/h d'eau primaire, on dérive à partir du courant d'eau primaire ($Q_h$) un courant partiel ($q_h$) d'eau primaire débitant jusqu'à 5 m$^3$/h, et de préférence 1,7 m$^3$/h, à travers la conduite de dérivation (5), qu'on injecte dans le courant partiel ($q_h$) un mélange comportant de 1 à 1,2 g/h d'ozone dans environ 700 l/h d'air (mesuré à la pression atmosphérique), qu'on fait mousser par un mixage intensif dans la conduite de dérivation (5) le fluide contenant de l'ozone, que l'on injecte l'aérosol fluide ainsi créé dans le courant principal d'eau primaire, à la jonction de la conduite de dérivation (5) avec ce courant principal, et que le courant ainsi obtenu d'eau purifiée, chlorée et contenant de l'ozone ainsi que l'air issu de l'ozonisateur (7) est ramené jusqu'au bassin (1) sans ventiler le système de conduites fermées (2) par lequel il passe.

**2.** Méthode selon la revendication 1, caractérisée en ce que l'on utilise un ozonisateur (7) ayant un débit de production maximal de 1,2 g/h d'ozone pour 700 l/h d'air atmosphérique.

**3.** Méthode selon la revendication 1 ou 2, caractérisée en ce que pour obtenir le mélange mousseux de fluide composé de gaz et de liquide passant par la dérivation (5) on fait passer le courant de fluide à travers une spirale (9, 9') formée par un tube ou un tuyau avec un courant à circulation verticale, à une pression et à une vitesse suffisante pour former un mélange mousseux.

**4.** Méthode selon la revendication 3, caractérisée en ce qu'on introduit l'agent chloré, par exemple du chlore gazeux ou une solution d'hypochlorite de sodium dans la spirale (9, 9').

**5.** Méthode selon la revendication 3, caractérisée en ce qu'on utilise une spirale (9) d'une longueur totale de 6 à 10 m présentant trois spires dans le plan vertical et ayant de préférence une forme ovale s'étendant à la verticale, et en ce qu'un courant partiel ($q_h$) de 1,7 m$^3$/h d'eau primaire ainsi qu'un courant d'air et d'ozone avec 1 à 1,2 g/h d'ozone dans 700 l/h d'air s'écoule à travers la spirale (9), de manière à ce qu'il y règne une pression allant jusqu'à environ 1,5 bar au-dessus de la pression existant dans la conduite principale (2) d'eau primaire et que la vitesse du fluide dans la spirale soit d'environ 2 m/s.

**6.** Méthode selon la revendication 4, caractérisée en ce qu'on utilise une spirale (9') ayant deux plans de circulation verticaux et une forme rectangulaire d'environ 1,25 m de haut et d'environ 1 m de large, en ce que l'agent chloré est introduit dans la spirale (9'), et qu'à une pression dans la spirale supérieure de 1,5 à 2,5 bar à celle régnant dans la conduite (2) du courant principal d'eau primaire, le courant fluide formé par le courant partiel ($q_h$) d'eau primaire, l'air porteur d'ozone et l'agent chloré traverse la spirale à une vitesse de 2 à 3,5 m/s.

7. Appareil pour la mise en oeuvre de la méthode selon une des revendications 1 à 6, caractérisé par une conduite de dérivation (5) contenant une pompe d'accélération (6), au moins un ozonisateur (7) connecté à la conduite de dérivation (5) en aval de la pompe (6) et produisant un débit maximal de 1,2 g/h d'ozone dans 700 l/h d'air atmosphérique, et en ce qu'une partie de la conduite de dérivation (5) forme une spirale (9, 9') prévue comme chambre de mixage pour le courant formé de gaz et de liquide traversant la conduite de dérivation (5) et présentant au moins deux bouches de circulation à plan vertical.

8. Appareil selon la revendication 7, caractérisé en ce que l'ozonisateur (7) fonctionne selon le principe d'une extraction en sous-pression au moyen d'un injecteur (8) à sous-pression.

9. Appareil selon la revendication 8, caractérisé en ce que l'injecteur (8) à sous-pression comporte une chambre à turbulence pour mixer des gaz dans des liquides.

10. Appareil selon une des revendications 7 à 9, caractérisé en ce que la spirale (9) est formée par un tube ou un tuyau ayant un diamètre intérieur de 1,9 à 2,8 cm, une longueur totale de 6 à 10 m, trois spires dans le plan vertical, et de préférence une forme ovale verticale d'environ 1,5 m de haut.

11. Appareil selon une des revendications 7 à 9, caractérisé en ce que la spirale (9') forme deux boucles de circulation verticales planes et présente une forme rectangulaire d'environ 1,25 m de haut et 1 m de large.

12. Appareil selon une des revendications 7 à 11, caractérisé en ce que la spirale (9, 9') possède un branchement pour l'introduction de chlore gazeux ou d'une solution contenant du chlore.

13. Appareil pour la mise en oeuvre de la méthode selon une des revendications 1 à 6, caractérisé en ce qu'il forme un ensemble compact et transportable comprenant une partie d'une conduite de dérivation (5), un ozonisateur (7) connecté à celle-ci et ayant un débit maximal de production de 1,2 g/h d'ozone dans 700 l/h d'air atmosphérique, une spirale formant chambre de mixage (9, 9') disposée entre les deux et présentant un branchement pour l'introduction d'un agent chloré, ainsi qu'une valve régulatrice pour l'agent chloré et une unité de commande automatique pour celle-ci.

Fig. 1

EP 0 237 793 B1

# Fig. 2

7 · $O_3$

8 · q

9'

6

5

Chlorungsmittel

10'

Q (+ Ozon + Luft + Chlorungsmittel)

2

Q

4

3

1

12

11

2

11

12

Q (+ Chlorungsmittel + Luft)

EP 0 237 793 B1